# EUROPEAN PATENT SPECIFICATION

(11) **EP 3 620 815 B1**
(45) Date of publication and mention of the grant of the patent: **07.09.2022**
(21) Application number: 19186924.7
(22) Date of filing: 18.07.2019
(51) Int. Cl.: G01S 13/00, G01S 13/87, G06F 3/01

(54) **GESTURE DETECTION SYSTEM AND METHOD USING RADAR SENSORS**
GESTENDETEKTIONSSYSTEM UND VERFAHREN MIT RADARSENSOREN
SYSTÈME ET PROCÉDÉ DE DÉTECTION DE GESTE AU MOYEN DE CAPTEURS RADAR

(30) Priority: 19.07.2018 US 201816039940
(43) Date of publication of application: 11.03.2020
(73) Proprietor: Infineon Technologies AG, 85579 Neubiberg (DE)
(72) Inventor: BAHETI, Ashutosh, 81541 München (DE); SANTRA, Avik, 81541 München (DE)
(74) Representative: 2SPL Patentanwälte PartG mbB

(56) References cited:
- US-A1- 2014 050 354

## Description

### TECHNICAL FIELD

The present invention relates generally to an electronic system and method, and, in particular embodiments, to a gesture detection system and method using radar sensors.

### BACKGROUND

Many electronic devices exhibit one or more user interfaces. For example, a typical personal computer displays images on a screen and receives user commands from a keyboard and a mouse.

Voice commands are also available in some devices, such as smartphones and other devices that include a virtual assistant.

Modern smartphones, tablets and laptops typically include a touchscreen that displays images and receives control information from a user based on touching the touchscreen. The use of touchscreens allows a user to interact directly with the information displayed on the screen instead of relying solely on traditional input devices, such as a keyboard and a mouse.

In addition to simple touch gestures, modern touchscreen interfaces are capable of recognizing multi-touch gestures when touching the screen with a stylus or one or more fingers. Touchscreen gestures such as rotating knobs, adjusting sliders, and changing the zoom of an image displayed on the screen are known in the art.

Some devices, such as some modern smartphones, have replaced keyboard and mouse inputs with a touchscreen interface. A virtual keyboard that is accessed via the touchscreen is used instead of a traditional keyboard. The mouse and other complex interactions are replaced with a variety of touchscreen gestures.

Patent Document 1, US 2014/050354 A1, proposes a method for gesture recognition including detecting one or more gesture-related signals using the associated plurality of detection sensors.

### SUMMARY

There may be a demand for providing an improved concept for a controller, a device and a method. Such demand may be satisfied by the subject matter of any of the claims.

In accordance with an embodiment, a controller is configured to be coupled to a plurality of millimeter-wave radars mounted on a device having a screen. The controller is configured to: at a first time, detect a first presence of an object in a field of view of a first millimeter-wave radar of the plurality of millimeter-wave radars; at a second time, detect a second presence of the object in a field of view of a second millimeter-wave radar of the plurality of millimeter-wave radars; determine a gesture signature based on detecting the first presence of the object in the field of view of the first millimeter-wave radar at the first time and detecting the second presence of the object in the field of view of the second millimeter-wave radar at the second time; and execute a command based on the determined gesture signature, select a first set of millimeter-wave radars from the plurality of millimeter-wave radars, wherein the first set comprises the first and second millimeter-wave radars, wherein each millimeter-wave radar of the plurality of millimeter-wave radars is configured to generate a signal associated with a presence of an object in respective fields of view at respective outputs, and wherein determining the gesture signature is further based on outputs of each millimeter-wave radar of the first set, wherein the first set is a subset of millimeter-wave radars from the plurality of millimeter-wave radars.

Some embodiments relate to a controller configured to be coupled to a plurality of millimeter-wave radars mounted on a device having a screen, the controller configured to, at a first time, detect a first presence of an object in a field of view of a first millimeter-wave radar of the plurality of millimeter-wave radars; at a second time, detect a second presence of the object in a field of view of a second millimeter-wave radar of the plurality of millimeter-wave radars, the second time occurring after the first time; determine a gesture signature based on detecting the first presence of the object in the field of view of the first millimeter-wave radar at the first time and detecting the second presence of the object in the field of view of the second millimeter-wave radar at the second time; and; execute a command based on the determined gesture signature.

Optionally, the controller is configured to determine the gesture signature further based on an absence or a presence of the object in a field of view of a third millimeter-wave radar of the plurality of millimeter-wave radars at a third time, wherein the third time is between the first time and the second time.

Optionally, the controller is further configured to dynamically modify the first set by adding or removing one or more millimeter-wave radars from the first set.

Further optionally, the controller is further configured to execute a first command based on the determined gesture signature when the first set is selected, and a second command different from the first command based on the determined gesture signature when the modified first set is selected.

Optionally, the controller is further configured to select a second set of millimeter-wave radars from the plurality of millimeter-wave radars, the second set comprising a plurality of millimeter-wave radars; determine a second gesture signature based on outputs of the millimeter-wave radars of the second set; and execute a second command based on the determined second gesture signature.

Further optionally, each millimeter-wave radar of the plurality of millimeter-wave radars belongs, at most, to one set of the first and second sets at a given time.

Optionally, the controller is further configured to determine the command from a plurality of commands based on a state of the device.

Further optionally, the state of the device comprises a sleep state, an active state, and a first app running state.

Optionally, the object comprises a human finger.

Further optionally, the controller is configured to ignore a presence of the object in the field of view of the first millimeter-wave radar or the second millimeter-wave radar when the object is at first distance from the screen or closer.

Optionally, the first distance is between 2 cm and 5 cm.

Further optionally, the gesture signature corresponds to a clockwise or counter-clockwise gesture of the object.

In accordance with an embodiment, a device includes: a screen; a plurality of millimeter-wave radars mounted on the device; and a controller. The controller is configured to: at a first time, detect a first presence of an object in a field of view of a first millimeter-wave radar; at a second time, detect a second presence of the object in a field of view of a second millimeter-wave radar; determine a gesture signature based on detecting the first presence of the object in the field of view of the first millimeter-wave radar at the first time and detecting the second presence of the object in the field of view of the second millimeter-wave radars at the second time; and execute a command based on the determined gesture signature, select a first set of millimeter-wave radars from the plurality of millimeter-wave radars, wherein the first set comprises the first and second millimeter-wave radars, wherein each millimeter-wave radar of the plurality of millimeter-wave radars is configured to generate a signal associated with a presence of an object in respective fields of view at respective outputs, and wherein determining the gesture signature is further based on outputs of each millimeter-wave radar of the first set, wherein the first set is a subset of millimeter-wave radars from the plurality of millimeter-wave radars.

Some embodiments relate to a device comprising a screen; a plurality of millimeter-wave radars mounted on the device; and a controller configured to at a first time, detect a first presence of an object in a field of view of a first millimeter-wave radar of the plurality of millimeter-wave radars; at a second time, detect a second presence of the object in a field of view of a second millimeter-wave radar of the plurality of millimeter-wave radars, the second time occurring after the first time; determine a gesture signature based on detecting the first presence of the object in the field of view of the first millimeter-wave radar at the first time and detecting the second presence of the object in the field of view of the second millimeter-wave radars at the second time; and execute a command based on the determined gesture signature.

In accordance with an embodiment, a method includes: detecting, at a first time, a first presence of a first object in a field of view of a first millimeter-wave radar of a plurality of millimeter-wave radars mounted on a device having a screen; detecting, at a second time, a second presence of a second object in a field of view of a second millimeter-wave radar of the plurality of millimeter-wave radars; determining a gesture signature based on outputs of the first and second millimeter-wave radars; and executing a command on the device based on the determined gesture signature, select a first set of millimeter-wave radars from the plurality of millimeter-wave radars, wherein the first set comprises the first and second millimeter-wave radars, wherein each millimeter-wave radar of the plurality of millimeter-wave radars is configured to generate a signal associated with a presence of an object in respective fields of view at respective outputs, and wherein determining the gesture signature is further based on outputs of each millimeter-wave radar of the first set, wherein the first set is a subset of millimeter-wave radars from the plurality of millimeter-wave radars.

### Brief Description of the Drawings

For a more complete understanding of the present invention, and the advantages thereof, reference is now made to the following descriptions taken in conjunction with the accompanying drawings, in which:
Figure 1 shows a cross-section view of a millimeter-wave radar system, according to an embodiment of the present invention;
Figure 2 shows a top view of the millimeter-wave radar system of Figure 1, as implemented in a smartphone and having six monostatic millimeter-wave radars, according to an embodiment of the present invention;
Figure 3A shows a cross-section view of a millimeter-wave radar of the millimeter-wave radar system of Figure 1, according to an embodiment of the present invention;
Figures 3B and 3C show a top view and a bottom view of the millimeter-wave radar of Figure 3A, according to an embodiment of the present invention;
Figure 3D shows a schematic diagram of the millimeter-wave radar of Figure 3A, according to an embodiment of the present invention;
Figures 4A-4C show a top view of a millimeter-wave radar system, as implemented in a smartphone and having two monostatic millimeter-wave radars 102, according to an embodiment of the present invention;
Figures 4D-4F illustrates a method of detecting a gesture by the millimeter-wave radar system of Figures 4A-4C, according to an embodiment of the present invention;
For example, Figures 4G-4I illustrate a method of detecting another gesture by the millimeter-wave radar system of Figures 4A-4C, according to an embodiment of the present invention;
For example, Figures 4J-4L illustrate a method of detecting yet another gesture by the millimeter-wave radar system of Figures 4A-4C, according to an embodiment of the present invention;

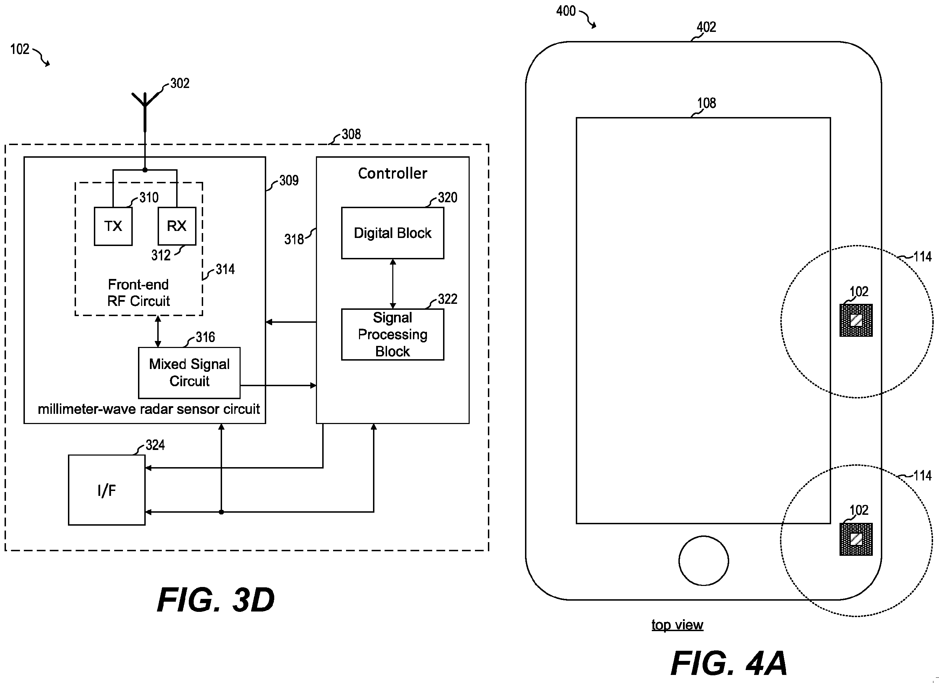

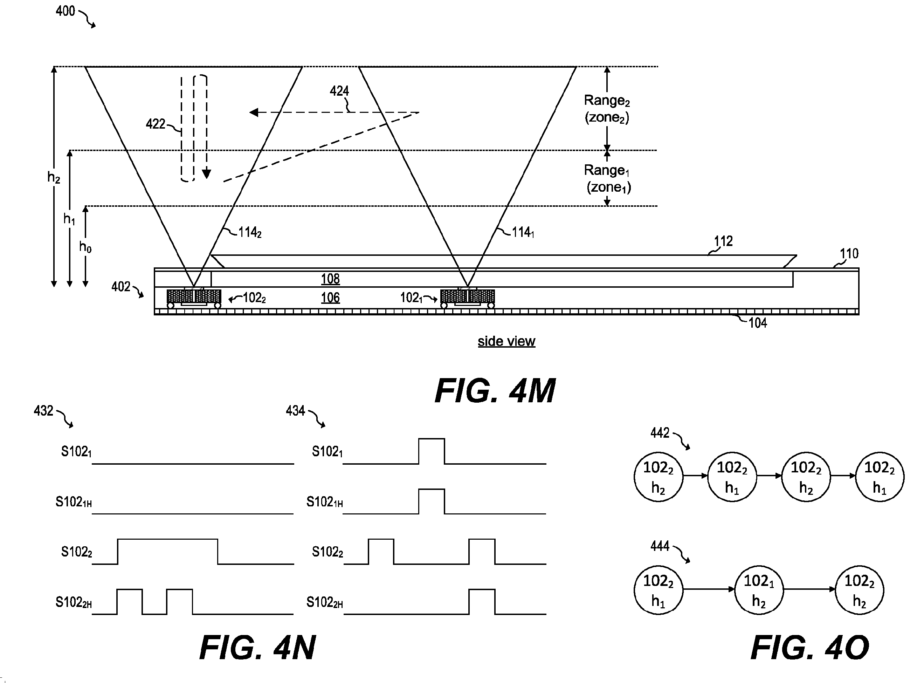

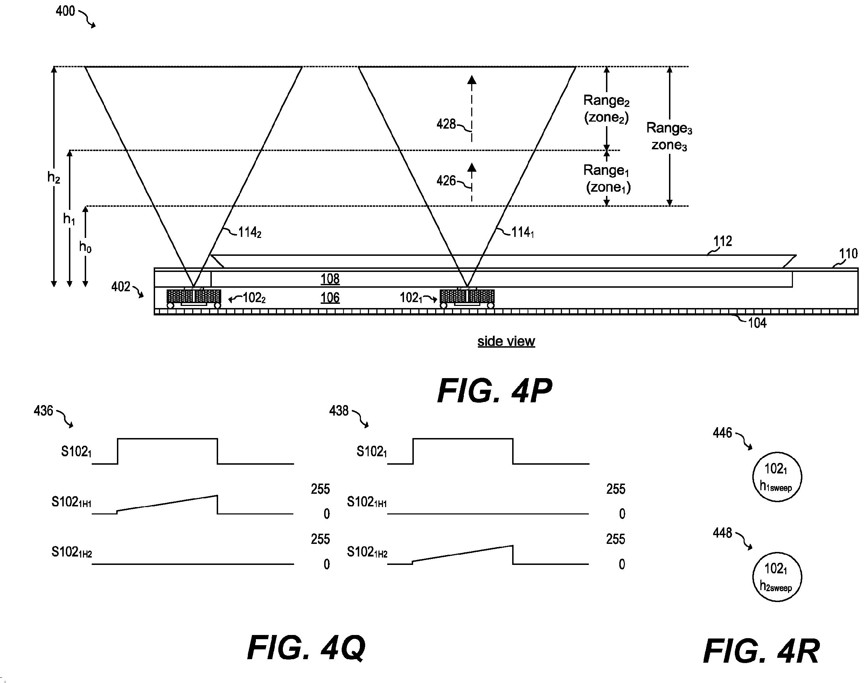

Figures 4M-4O illustrate a method of detecting multi-height gestures by the millimeter-wave radar system of Figures 4A-4C, according to an embodiment of the present invention;
Figures 4P-4R illustrate another method of detecting multi-height gestures by the millimeter-wave radar system of Figures 4A-4C, according to an embodiment of the present invention;

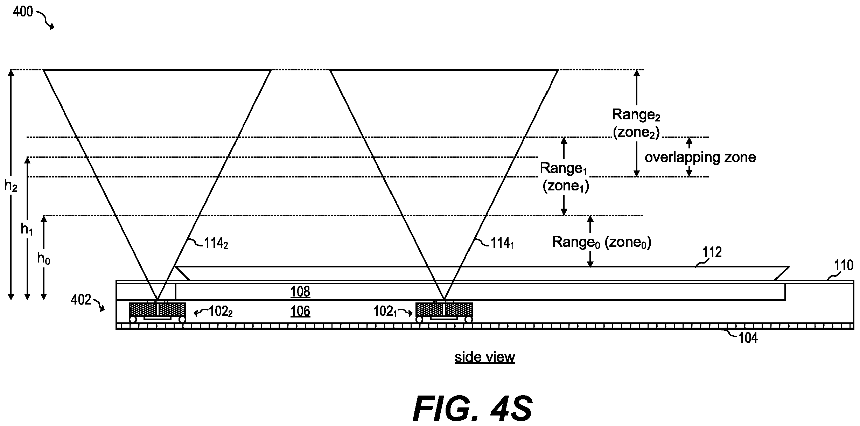

Figure 4S shows the millimeter-wave radar system of Figures 4A-4C having overlapping zones, according to an embodiment of the present invention;

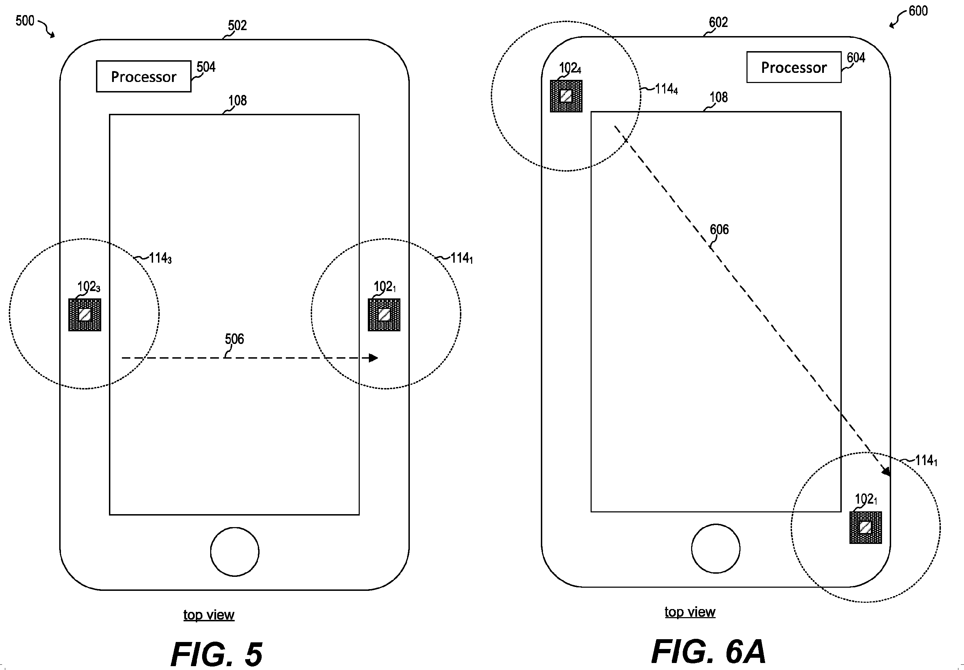

Figure 5 shows a top view of a millimeter-wave radar system having two millimeter-wave radars, according to an embodiment of the present invention;
Figures 6A-6C show a top view of millimeter-wave radar system 600 having two millimeter-wave radars and associated gesture signatures, according to an embodiment of the present invention;

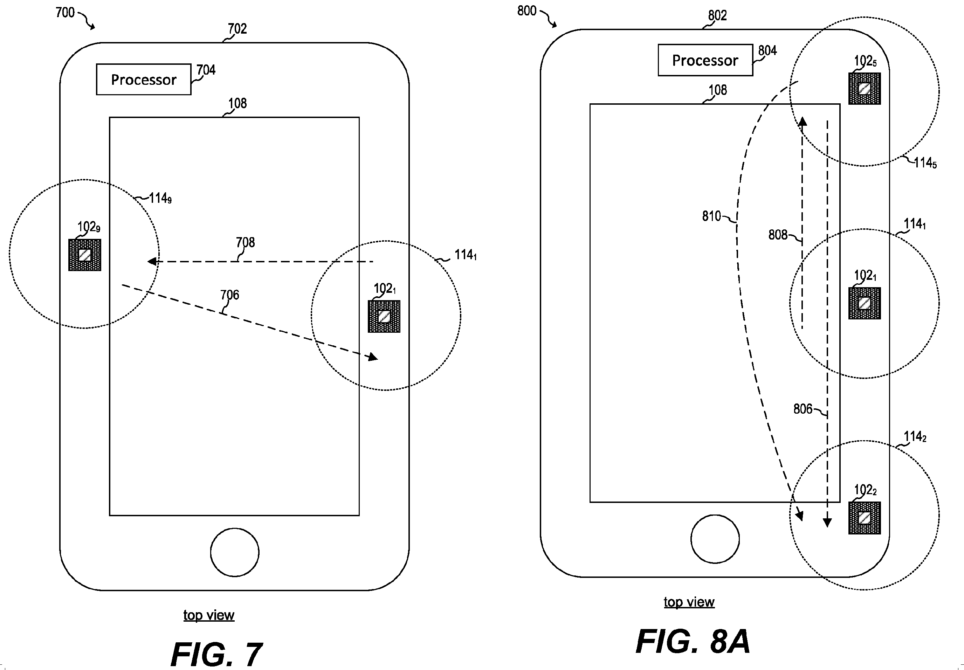

Figure 7 shows a top view of a millimeter-wave radar system having two monostatic millimeter-wave radars, according to another embodiment of the present invention;

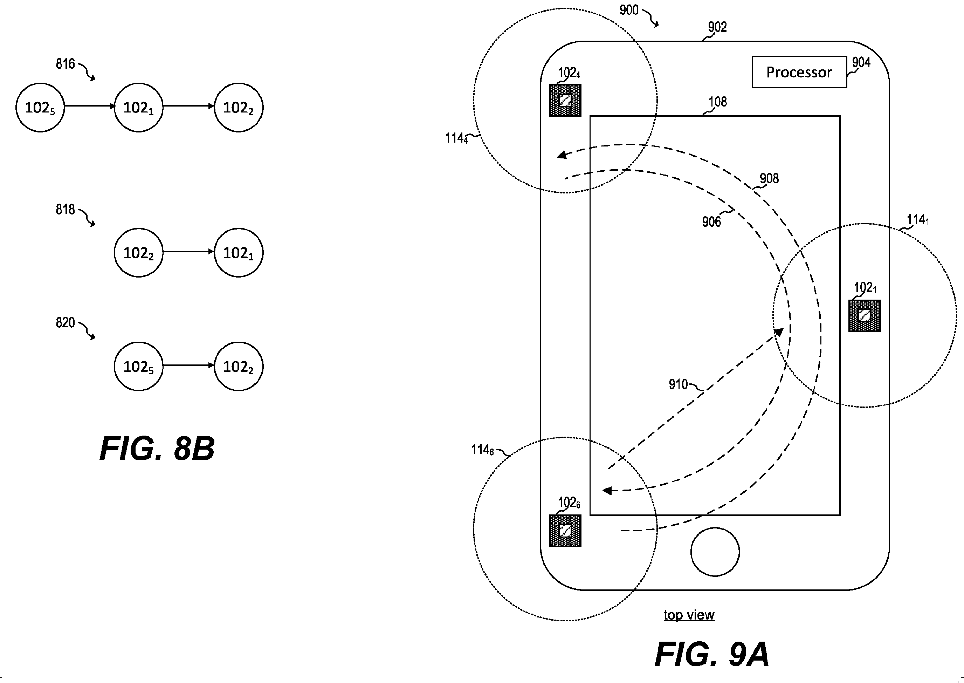

Figures 8A and 8B show possible gestures and their respective gesture signatures of a millimeter-wave radar system having three millimeter-wave radars, according to an embodiment of the present invention;

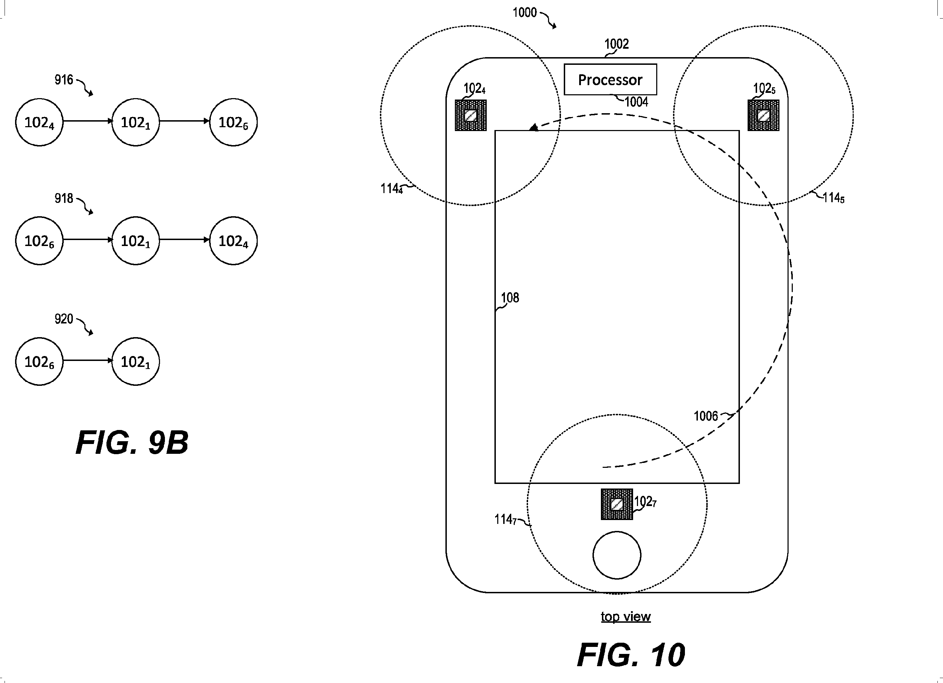

Figures 9A and 9B show possible gestures and their respective gesture signatures of a millimeter-wave radar system having three millimeter-wave radars, according to an embodiment of the present invention;

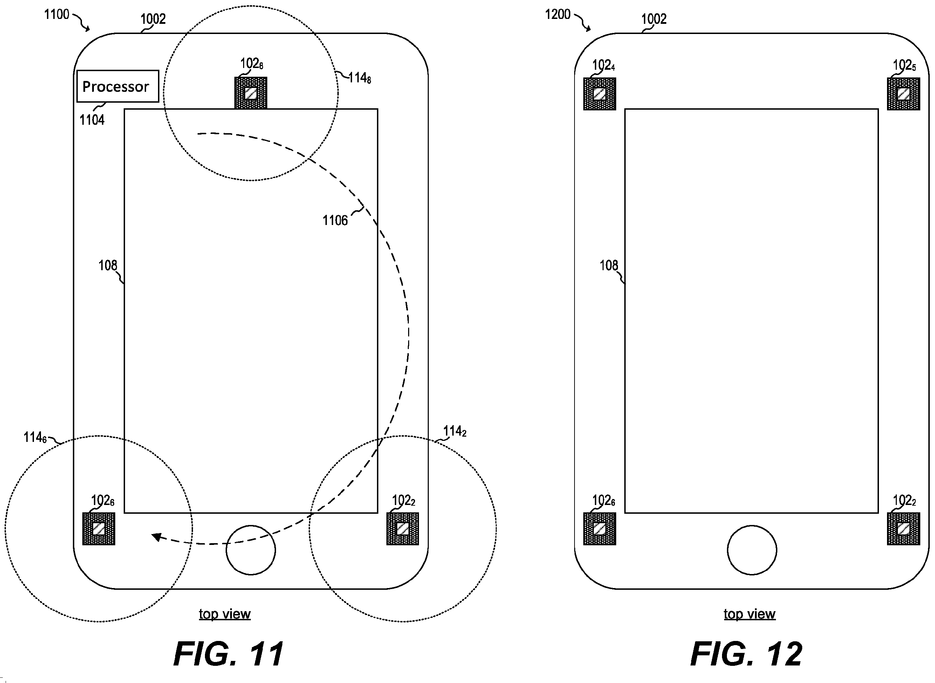

Figures 10 and 11 show respective top views of two millimeter-wave radar systems, each having three millimeter-wave radars, according to an embodiment of the present invention;

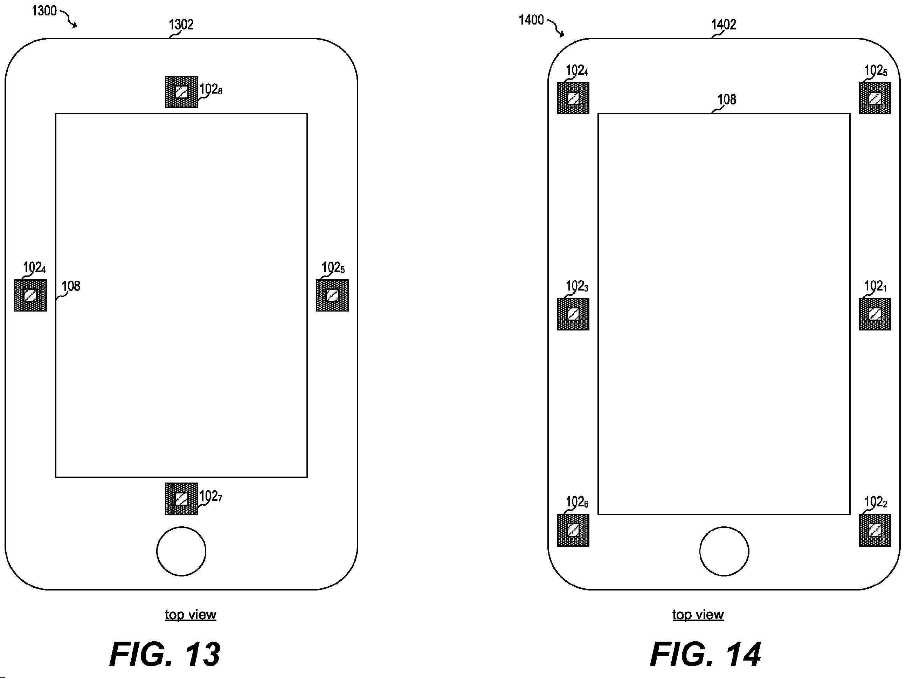

Figures 12 and 13 show respective top views of millimeter-wave radar systems having four millimeter-wave radars, according to an embodiment of the present invention;
Figure 14 shows a top view of a millimeter-wave radar system having six millimeter-wave radars, according to an embodiment of the present invention;

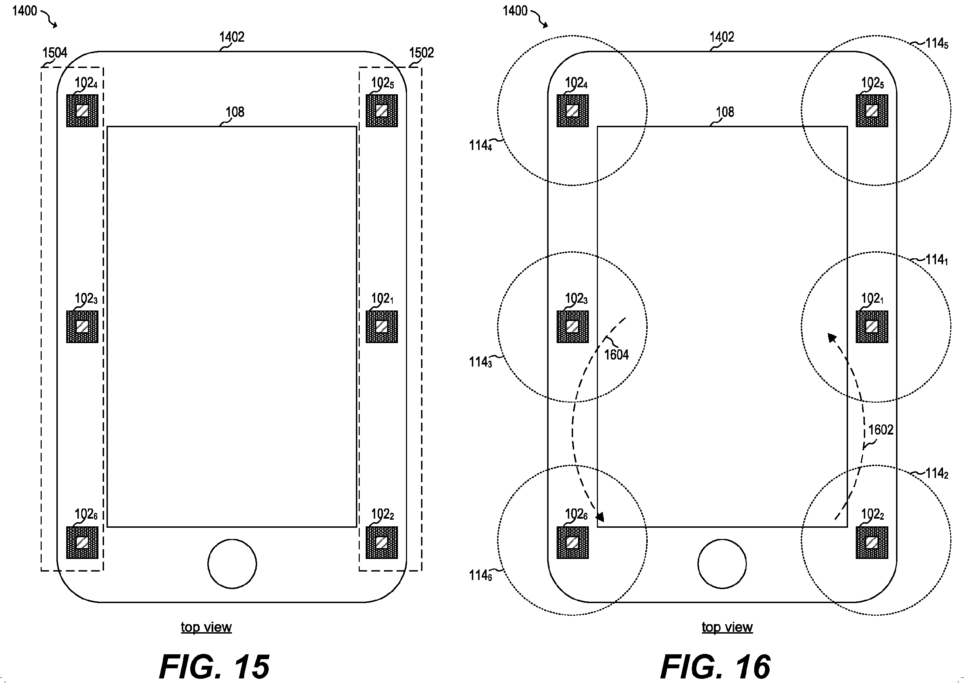

Figures 15-17 show non-limiting examples of use cases of the millimeter-wave radar system of Figure 14, according to embodiments of the present invention;

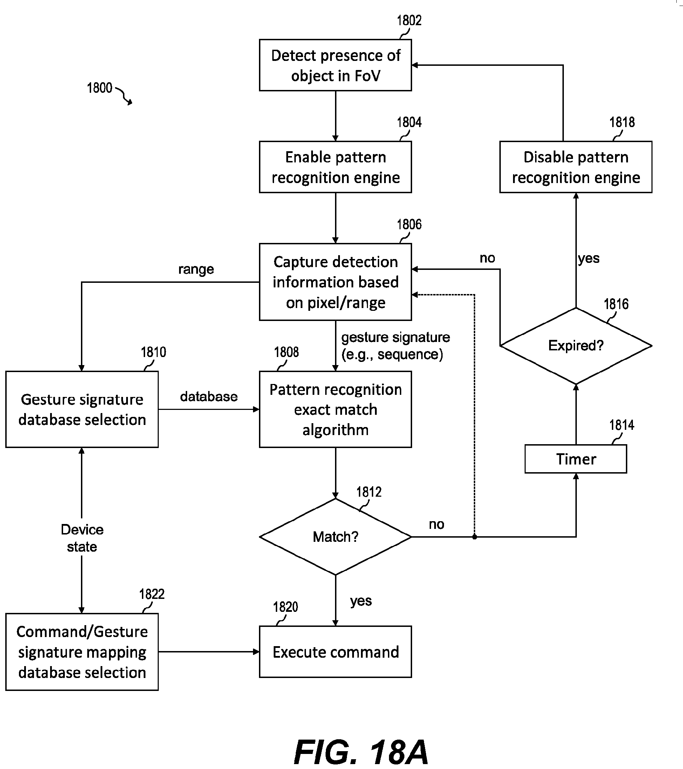

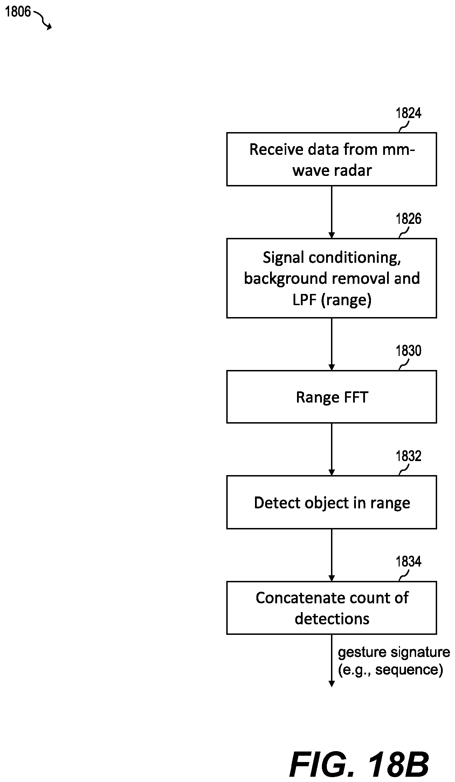

Figures 18A and 18B illustrate a flow chart of an embodiment method of gesture detection and associated command execution, according to an embodiment of the present invention;

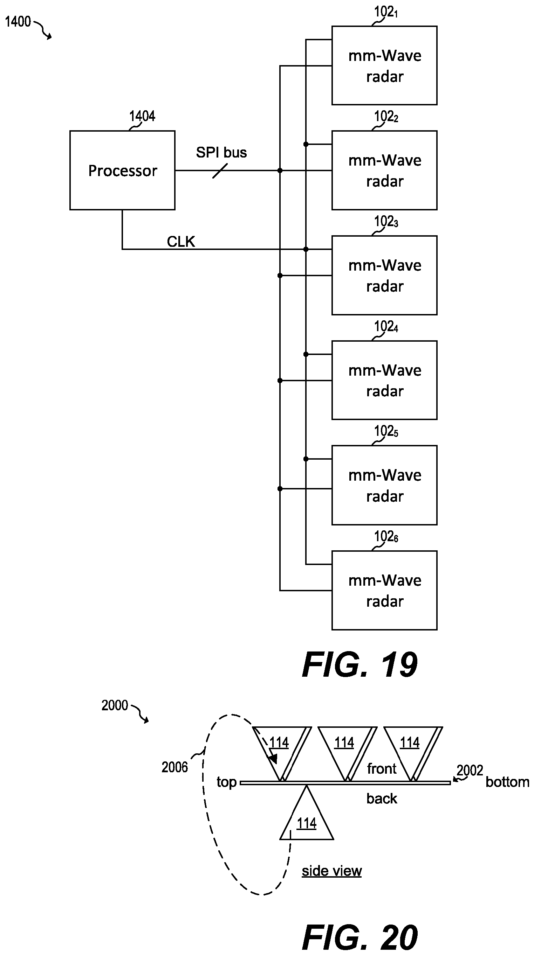

Figure 19 shows a schematic diagram of the millimeter-wave radar system of Figure 14, according to an embodiment of the present invention; and
Figure 20 shows a side view of a millimeter-wave radar system having six millimeter-wave radars pointing outwards from the front of a smartphone and one millimeter-wave radar pointing outwards from the back of the smartphone, according to an embodiment of the present invention.

Corresponding numerals and symbols in different figures generally refer to corresponding parts unless otherwise indicated. The figures are drawn to clearly illustrate the relevant aspects of the preferred embodiments and are not necessarily drawn to scale. To more clearly illustrate certain embodiments, a letter indicating variations of the same structure, material, or process step may follow a figure number.

### DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The description below illustrates the various specific details to provide an in-depth understanding of several example embodiments according to the description. The embodiments maybe obtained without one or more of the specific details, or with other methods, components, materials and the like. In other cases, known structures, materials or operations are not shown or described in detail so as not to obscure the different aspects of the embodiments. References to "an embodiment" in this description indicate that a particular configuration, structure or feature described in relation to the embodiment is included in at least one embodiment. Consequently, phrases such as "in one embodiment" that may appear at different points of the present description do not necessarily refer exactly to the same embodiment. Furthermore, specific formations, structures or features may be combined in any appropriate manner in one or more embodiments.

The present invention will be described with respect to embodiments in a specific context, a device, such as a smartphone, having a touchscreen and one or more millimeter-wave radars for various types of three-dimensional gesture recognition. Embodiments of the present invention may be used with other types of three-dimensional gesture recognition as well as in other devices, such as tablets, laptops, televisions, display panels, automotive infotainment systems, devices having a screen without a touchscreen and devices without a screen. Some embodiments relate to a user interface based on multi coherent radar sensors. Some embodiments relate to a radar-based volume user interface.

In an embodiment of the present invention, gestures of an object, such as a human finger, are detected above a touchscreen of a smartphone by using millimeter-wave radars. In some embodiments, each millimeter-wave radar detects the presence or absence of the object in their respective field of view with respect to a reference clock or other timing reference. Each millimeter-wave radar may be implemented, for example, using a simple single radar transceiver having a directional antenna. The sequence of object detections by each millimeter-wave radar is mapped to a gesture signature that is associated with a particular command. In some embodiments, the distance (range) between the object making the gesture and the device may be considered when mapping the gesture to a gesture signature. In other embodiments, the distance between the object and the device is ignored.

In some embodiments, a user of the smartphone may advantageously interact with the smartphone to launch applications (apps) or perform other functions without touching the screen, or exiting or hiding the current app. Changing the volume, authenticating a user, app initiation, speed dial, superficial app control interface, and turning off the screen are non-limiting examples of such functions.

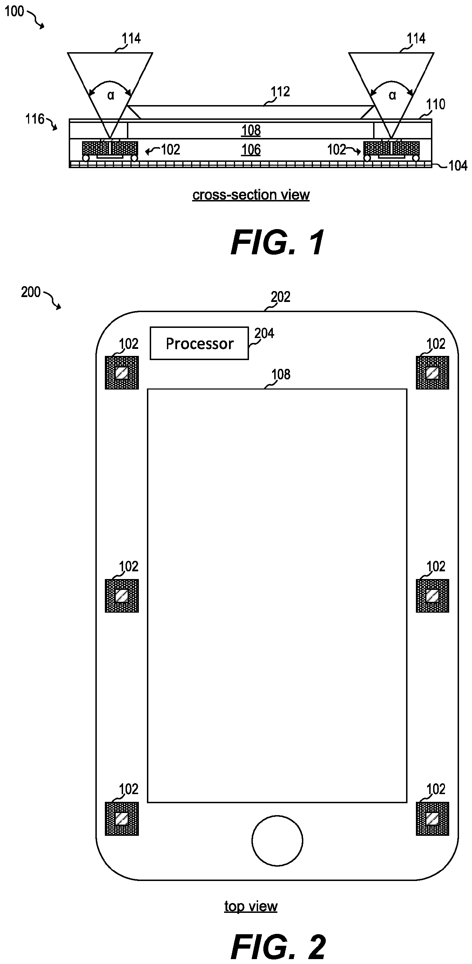

Figure 1 shows a cross-section view of millimeter-wave radar system 100, according to an embodiment of the present invention. Millimeter-wave radar system 100 includes a plurality of millimeter-wave radars 102, and is implemented in device 116, which includes touchscreen 108. For instance, all or part of the millimeter-wave radars 102 are monostatic millimeter-wave radars.

As shown in Figure 1, touchscreen 108 is disposed over molding compound 106. Some embodiments, such as embodiments implemented in a mobile phone, may have an air gap instead of molding compound 106. Glass 110 is disposed over touchscreen 108. Millimeter-wave radars 102 are disposed in printed circuit board (PCB) 104.

During normal operation, millimeter-wave radars 102 transmits one or more radar signals (not shown), such as chirps, towards their respective fields of view 114. The transmitted radar signals are reflected by objects (not shown) in fields of view 114. The objects in the field of view may include all or part of a hand, such as one or more human fingers, a stylus, or other objects, for example. The reflected radar signals (not shown), which are also referred to as the reflected signals or the echo signals, are detected by respective millimeter-wave radar 102, digitized, thereby generating echo data, and processed by a processor (not shown) to, for example, identify gestures made by a finger or other object.

Millimeter-wave radars 102 have respective fields of view 114 that are directed away from millimeter-wave radar system 100 so as to allow detection of objects in the vicinity of millimeter-wave radar system 100. The fields of view may extend, for example, up to 30 cm from millimeter-wave radars 102 at an angle α between 45° and 50° in a direction away from device 116. In some embodiments, field of view 114 extends farther than 30 cm, or closer than 30 cm and/or at an angle higher than 50° or lower than 45°. Although fields of view 114 are illustrated as a triangle in the cross-section view of Figure 1, it is understood that fields of view 114 may have a generally cone-shaped configuration having a generally circular cross-section when seen in a top view (not shown in Figure 1).

Touchscreen 108 has a field of view 112 that is very close to touchscreen 108. For example, touchscreen 108 may be implemented as a capacitive touchscreen having a field of view that extends within 1 cm of touchscreen 108.

Device 116 may be, for example, a smartphone, tablet, laptop, display panel, automotive infotainment system, television, or a wearable device having a display. In the examples that follow, device 116 is implemented as a smartphone for illustrative purposes. However, it is understood that other devices may be used instead of a smartphone.

Figure 2 shows a top view of millimeter-wave radar system 200, as implemented in smartphone 202 and having six millimeter-wave radars 102, e.g. monostatic millimeter-wave radars 102, according to an embodiment of the present invention. Millimeter-wave radars other than monostatic may be used. Fields of view 112 and 114 and glass 110 are not shown in Figure 2 for clarity purposes.

As shown in Figure 2, millimeter-wave radar system 200 includes a plurality of millimeter-wave radars 102 and processor 204. Processor 204 is shown schematically in Figure 2. It is understood that processor 204 may be implemented in any suitable portion of smartphone 202, such as beneath touchscreen 108, for example.

Processor 204 receives data from one or more millimeter-wave radars 102 and determines whether an object is present in respective fields of view 114. In some embodiments, processor 204 also determines the range (distance) of the detected object from the respective millimeter-wave radar 102.

In some embodiments, all of millimeter-wave radars 102 receive the same clock signal and operate based on the same reference clock. By operating using the same reference clock, it is possible to determine the time of detection of objects in respective fields of view 114, which allows detection of various gestures, as will be explained in greater detail below. Other synchronization methods may be used.

Processor 204 may be implemented as a general purpose processor, controller or digital signal processor (DSP), such as a low power general purpose microcontroller. In some embodiments, processor 204 may be implemented as a custom application specific integrated circuit (ASIC). In some embodiments, processor 204 includes a plurality of processors, each having one or more processing cores. In other embodiments, processor 204 includes a single processor having one or more processing cores. In some embodiments, processor 204, or a portion of processor 204 may be embedded in millimeter-wave radar 102.

Processor 204 may communicate with millimeter-wave radars 102 using known communication protocols, such as serial peripheral interface (SPI), inter-integrated circuit I2C, inter-IC source (I2S) or others. Some embodiments, may use wireless communication protocols, such as Bluetooth or WiFi, for example. Other communication protocols, such as custom protocols or other standard communication protocols may also be used.

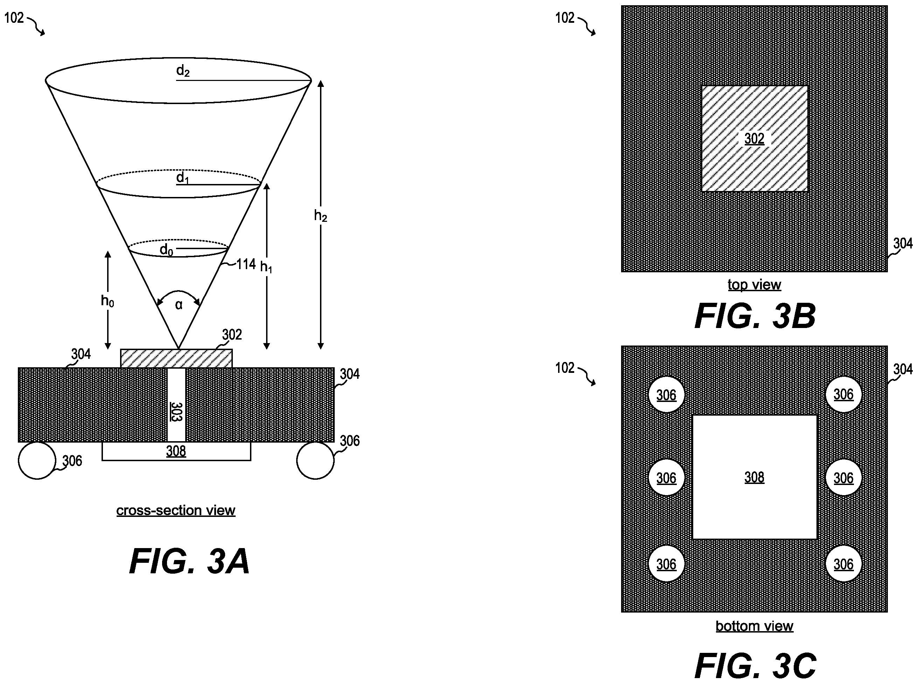

Figure 3A shows a cross-section view of millimeter-wave radar 102, according to an embodiment of the present invention. Millimeter-wave radar 102 includes die 308, balls 306, high frequency laminate 304 and antenna 302. Millimeter-wave radar 102 may be implemented, for example, as described in U.S. Patent No. 9,935,065, filed on December 21, 2016, in U.S. Patent Publication No. 2016/0178730, filed on November 30, 2015, and in U.S. Patent Publication No. 2018/0074173, filed on November 30, 2015.

As shown in Figure 3A, millimeter-wave radar 102 is implemented in monostatic configuration, in which the same antenna 302 is integrated in the same package, and is used for the transmitter (TX) module and for the receiver (RX) module. Implementing millimeter-wave radar 102 in monostatic configuration has the advantage of having a small footprint (e.g., in a device or system), and allows a device or system to implement multiple millimeter-wave radars 102 for gesture detection. It is understood that other types of millimeter-wave radars, such as millimeter-wave radars implemented in bistatic configuration, may be used, according to embodiments of the present invention.

Antenna 302 is coupled to die 308, for instance using conductive pillar 303. In some embodiments conductive pillar 303 is part of antenna 302 and is made with the same material as antenna 302. In other embodiments, the antenna may be remotely fed, for instance through electromagnetic coupling.

High frequency laminate may be, for example, RO 4350 laminate from Rogers Corporation, Megtron 6 or 7 laminates from Panasonic, HL972 or HL 872 laminates from Mitsubishi. Other high-speed laminates may also be used.

Balls 306 are used to connect die 308 with external circuits. Some embodiments may implement pads instead of balls. Other connectors may also be used.

Die 308 includes a millimeter-wave radar sensor circuit (not shown). The millimeter-wave radar sensor circuit may transmit and receive signals in the GHz range via antenna 302. For example, some embodiments may transmit and receive signals such as chirps in a band allocated around frequencies such as 95 GHz, 120 GHz, 140 GHz, and/or 240 GHz and/or other frequencies between about 95 GHz and about 240 GHz range. Other embodiments may transmit and receive signals such as chirps in the 20 GHz to 122 GHz range. Yet other embodiments may transmit and receive signals, such as chirps with frequencies above 240 GHz. Other frequencies and frequency ranges are also possible. By running at high frequencies, and by having the antenna integrated in the same package, the package and antenna size of millimeter-wave radar 102 may be reduced to allow a plurality of millimeter-wave radars 102 to be placed in the perimeter of a touchscreen, such as the touchscreen of a smartphone or wearable device.

In some embodiments, the millimeter-wave radar sensor circuit process the echo signals received by using band-pass filter (BPFs), low-pass filter (LPFs), mixers, low-noise amplifiers (LNAs), and intermediate frequency (IF) amplifiers in ways known in the art. The echo signals are then digitized using one or more analog-to-digital converters (ADCs) for further processing. Other implementations are also possible.

Millimeter-wave radar 102 is capable of detecting the presence of objects in field of view 114. As shown in Figure 3A, the area of object detection varies based on the distance between the object and antenna 302. As shown, the diameter of coverage of field of view 114 may increase with height. For example, diameter di, which corresponds to distance hi to antenna 302, is smaller than diameter d2, which corresponds to distance h2 to antenna 302, where distance h2 is larger than distance hi.

In some embodiments, millimeter-wave radar 102 detects the presence or absence of objects in field of view 114 irrespective of the object's distance to the millimeter-wave radar 102. In other embodiments, millimeter-wave radar 102 detects the presence or absence of objects in a predetermined range (height), such as between 5 cm and 30 cm, while ignoring the detection of objects outside the predetermined range. For example, in some embodiments, millimeter-wave radar 102 determines the distance to the detected objects using range transformations, such as range FFT. The presence or absence of objects may be associated with a particular range. For example, an object may be detected if it is between distances hi and h2. The object may be ignored (not detected) if the object is closer than distance hi or farther than h2, even though the object is in field of view 114.

Figures 3B and 3C show a top view and a bottom view of millimeter-wave radar 102, according to an embodiment of the present invention. Figure 3D shows a schematic diagram of millimeter-wave radar 102, according to an embodiment of the present invention.

As shown, millimeter-wave radar 102 includes die 308 and antenna 302. Die 308 includes millimeter-wave radar sensor circuit 309, controller 318, and interface circuit 324. Millimeter-wave radar sensor circuit 309 includes front-end RF circuit 314, and mixed signal circuit 316. Controller 318 includes digital block 320 and signal processing block 322.

RF circuit 314 is configured to transmit and receive radar signals (e.g., chirps). RF circuit 314 includes transmitter circuit 310, receiver circuit 312. RF circuit 314 is implemented in a monostatic configuration.

Transmitter circuit 310 and receiver circuit 312 may be implemented in any way known in the art. Mixed signal circuit 316 is configured to control RF circuit 514 to transmit signals (e.g., chirps), and to receive the echo signal. Mixed signal circuit 316 is also configured to translate the RF signals into digital signals that are then transmitted to controller 318.

Mixed signal circuit 316 may be implemented in any way known in the art. For example, in some embodiments, mixed signal circuit 316 includes one or more band-pass filters (BPFs), low-pass filters (LPFs), mixers, low-noise amplifier (LNA), intermediate frequency (IF) amplifiers, phase-locked loops (PLLs) and analog-to-digital converters (ADCs).

Controller 318 is configured to process the signals received from millimeter-wave radar sensor circuit 309 and transmit it to a processor (not shown in Figure 3D), such as processor 204. Controller 318 may be implemented in any way known in the art, such as a general purpose controller or processor, ASIC, or any other implementation. Controller 318 typically includes digital block 320 for general control purposes (e.g., controlling millimeter-wave radar sensor circuit 309 and interface circuit 324) and a signal processing block 322 for processing the signals received from millimeter-wave radar sensor circuit 309. Digital block 320 may include a finite state machine (FSM).

Signal processing block 322 may be implemented with a digital signal processor (DSP). In some embodiments, signal processing block 322 implements a portion or all of processor 204. In other embodiments, signal processing block 322 is not implemented and, instead, the raw data received from millimeter-wave radar sensor circuit 309 is sent to processor 204 for further processing. In some embodiments, millimeter-wave radar sensor circuit 309 may be implemented as a frequency modulated continuous wave (FMCW) sensor.

Interface circuit 324 is configured to transmit data from controller 318 to processor 204. Interface 324 may be implemented in any way known in the art. For example, interface 324 may be implemented for WiFi or Bluetooth communications, SPI, and I2C. Other communication protocols, including low power communication protocols and low data rate communication protocols may be used.

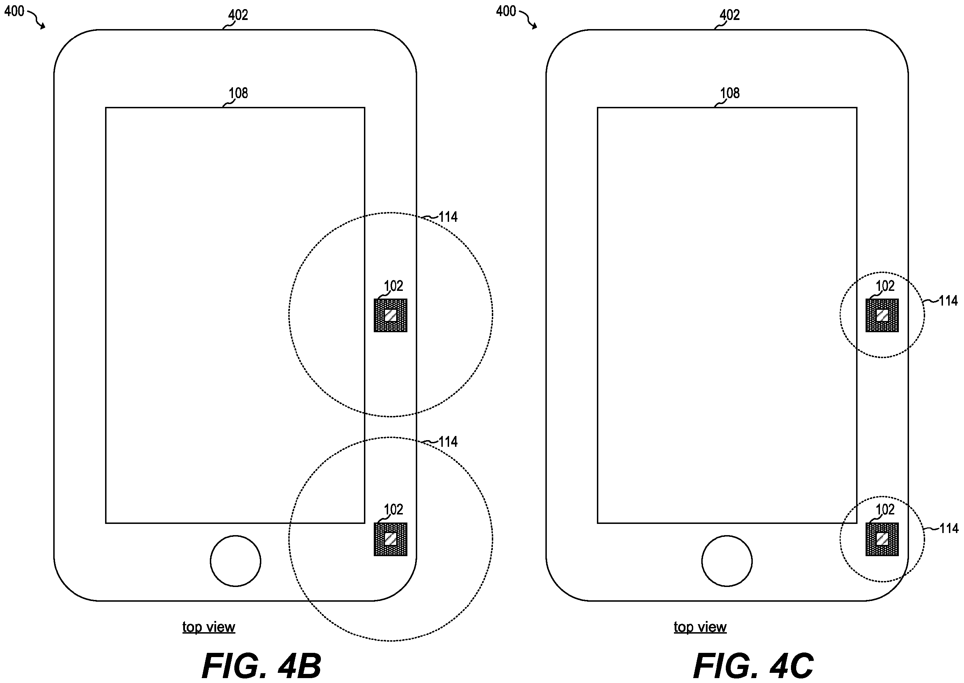

Figures 4A-4C show a top view of millimeter-wave radar system 400, as implemented in smartphone 402 and having two monostatic millimeter-wave radars 102, according to an embodiment of the present invention. Figures 4A, 4B, and 4C show fields of view 114 at heights hi, h2, and ho, respectively. Some embodiments may be implemented with millimeter-wave radars in other configurations, such as bistatic millimeter-wave radars.

In some embodiments, two-dimensional gestures of an object, such as all or part of a human hand, e.g. one or more fingers, are detected above a touchscreen of a smartphone by using a plurality of millimeter-wave radars synchronized to a time reference. In some embodiments, each c millimeter-wave radar behaves as a detection pixel indicating whether an object is detected (on) or not detected (off) in a predetermined range or range zone of its respective field of view. The sequence of detections is then associated with a gesture signature. A command is executed in the smartphone based on the gesture signature detected.

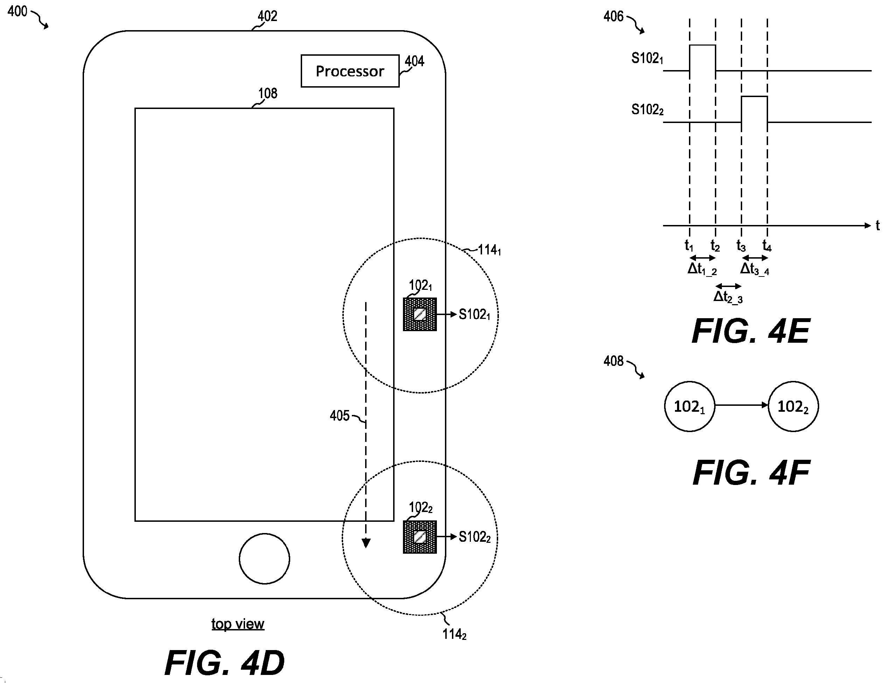

By synchronizing each, e.g. monostatic, millimeter-wave radar to the same time reference, such as the same clock, it is possible to identify the sequence of object detection in respective fields of view and perform gesture recognition without using beamforming techniques or other math-intensive signal processing. For example, Figures 4D-4F illustrate a method of detecting gesture 405 by millimeter-wave radar system 400, according to an embodiment of the present invention.

During normal operation, each millimeter-wave radar 102 monitors and detects objects in the respective field of view 114. When an object, such as a human finger, is swiped, for example, at a height hi (or range zonei), in a two-dimensional motion that crosses from first fields of view 1141 to second field of view 1142, the finger is detected at different times by each millimeter-wave radar 102.

As shown by Figure 4E, the object enters field of view 1141 at time t1, exits field of view 1141 at time t2, enters field of view 1142 at time t3, and exits field of view 1142 at time t4. Processor 404 may use either the entering times t1 and t3, the exit times t2 and t4, the holding times Δt1_2 and Δt3_4, the separation time Δt2_3, or any combination thereof, to determine a gesture. For example, based on timing diagram 406, processor 404 may determine gesture signature 408, which is associated with gesture 405, as a first object detection by monostatic millimeter-wave radar 1021 and a second object detection by millimeter-wave radar 1022 after the first object detection.

Entering and exiting fields of views 114 may be determined using radar signal processing techniques, such as signal conditioning and filtering to remove noise and false object detections and ranging transforms, such as range FFT to determine the height (range) or range zone of the detection.

As shown by Figure 4F, gesture 405 may be associated with gesture signature 408. In some embodiments, gesture 405 is only associated with gesture signature 408 if the gesture 405 occurs at height hi. In other embodiments, gesture 405 is only associated with gesture signature 408 if gesture 405 occurs at a range zone (e.g., range zone 1) that includes height hi. In yet other embodiments, gesture 405 is associated with gesture signature 408 regardless of the range at which gesture 405 is performed.

Gesture signature 408 may be associated with a particular command. In some embodiments, the association of gesture signatures may change depending on the state of the smartphone. For example, when smartphone 402 is in sleep mode, detection of gesture signature 408 may cause the display of touchscreen 108 to turn on. When smartphone 402 has the display on, detection of gesture signature 408 may cause smartphone 402 to take a picture, for example. The association between particular gestures and particular commands is customizable in some embodiments. Some embodiments exhibit context-based gesture recognition, in which a particular gesture is associated with a particular command only if a particular application is running in smartphone 402. Other customization options are also possible.

In some embodiments, a watchdog timer (not shown) is used so as to prevent gesture recognition if the time between the first object detection and the second object detection is too long or too short. For example, in some embodiments, a gesture is ignored if the time between object detections is longer than 1 second. In some embodiments, a gesture is ignored if the time between object detections is shorter than 10 ms. Other time thresholds are also possible.

The watchdog timer may be implemented, for example, by processor 404. Other implementations are also possible.

In some gestures, the object may enter field of view 1141 at a first height (e.g., hi), and enter field of view 1142 at a second height (e.g., h2). In some embodiments, processor 404 may ignore the difference in heights and may detect the same signature (e.g., gesture signature 408) regardless of the height of the object detection. In other embodiments, gesture signature 408 may be detected only if the object detection occurs within a predetermined range zone (e.g., between hi and h2). For example, processor 404 may ignore any gesture occurring at a height ho or lower. Ignoring gestures occurring very close to touchscreen 108 (e.g., at a height ho or lower), has the advantage of avoiding triggering commands when a user is holding smartphone 402 and interacting with touchscreen 108 in a normal manner. In some embodiments, height ho is between 2 cm and 5 cm. A different height may be used. In some embodiments height ho is customizable and/or changes dynamically based on which application is running in smartphone 402.

Ignoring gestures may be triggered by events external to the millimeter-wave radar system. For example, in some embodiments, gestures may be ignored if an object is in contact with touchscreen 108.

In some embodiments, fields of view 1141 and 1142 may overlap. In such embodiments, predetermined priority rules may be used to determine to which millimeter-wave radar 102 the detection of the object is associated. The predetermined rules may be, for example, that in case of conflict, the detection should always be associated with millimeter-wave radar 1021. Other predetermined priority rules may be used. In some embodiments, the predetermined priority rules may be changed or customized by a user either dynamically, during a configuration mode and/or may be context-based (e.g., based on the state of smartphone 402). In some embodiments, processor 404 may ignore the gesture if a conflict arises.

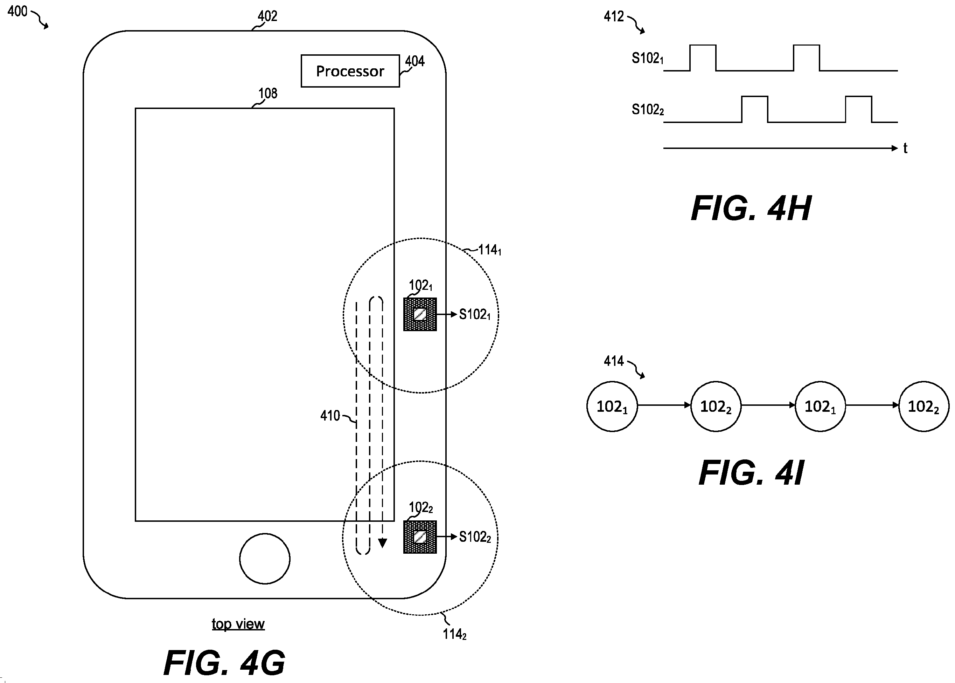

Processor 404 may detect gestures that involve multiple detections by millimeter-wave radars 102. For example, Figures 4G-4I illustrate a method of detecting gesture 410 by millimeter-wave radar system 400, according to an embodiment of the present invention.

As shown by Figures 4G and 4H, the detected object travels between fields of view 1141 and 1142, as illustrated by gesture 410 and timing diagram 412. Figure 4I shows the detected gesture signature 414 associated with gesture 410.

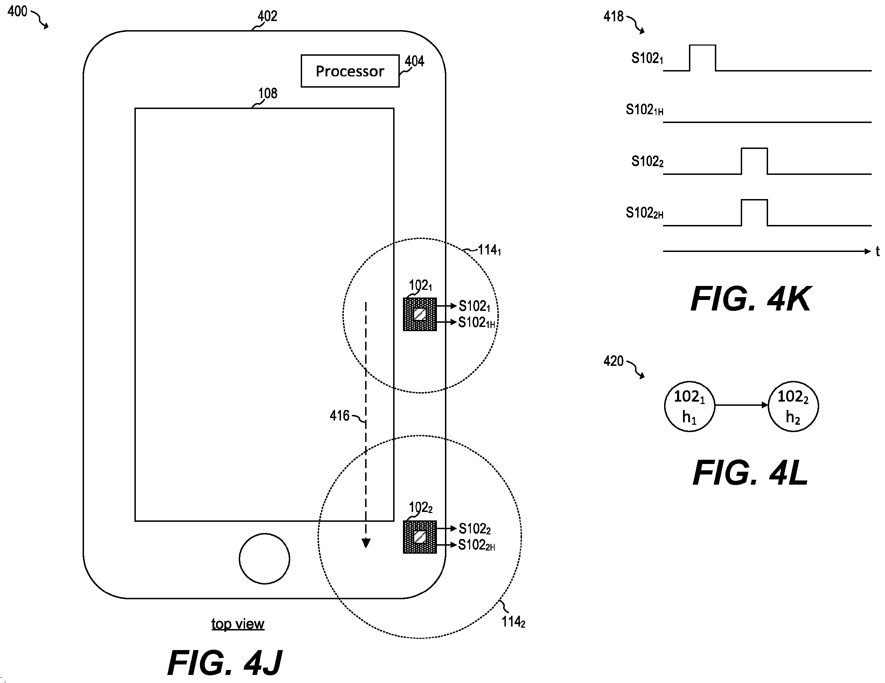

Processor 404 may detect gestures that involve detections of objects at multiple heights. For example, Figures 4J-4L illustrate a method of detecting gesture 416 by millimeter-wave radar system 400, according to an embodiment of the present invention.

As shown by Figures 4J-4L, processor 404 may associate gesture 416, which travels from field of view 11141 at height hi to field of view 1142 at height h2, with gesture signature 420. It is understood that, in some embodiments, height h1 and h2 may correspond to height range 1 (zone1) and height range 2 (zone2). For example, in some embodiments, zone2 may correspond to heights between 20 cm and 30 cm while zone1 may correspond to heights between 10 cm and 20 cm. Other heights and height ranges may be used.

In some embodiments, processor 404 may associate gesture 416 with gesture signature 408 (by ignoring the height of the detection). In some embodiments, the gesture signature associated with gesture 420 may change based on the state of smartphone 402, for example.

As shown in Figure 4K, signals S1021H and S1022H are low if the object detection occurred at height hi and are high if the object detection occurred at height h2. Other signal encoding schemes, such as opposite polarity, may be used.

In some embodiments, two-dimensional (vertical) gestures may be detected by using height (range) information. For example, some embodiments may detect gestures that involve a trajectory of an object getting closer to or further from a particular millimeter-wave radar 102. In some embodiments, the vertical gesture is tracked by detecting transitions between zones (e.g., between zone1 and zone2) of the same millimeter-wave radar 102. In some embodiments, the gesture is tracked within a single zone (e.g., zone1). Some embodiments may determine which command to execute in smartphone 402 based on the zone of the detection of the gesture.

In some embodiments, detection of three-dimensional gestures may be achieved by combining detection of one or more millimeter-wave radars with height information. For example, Figures 4M-4O illustrate a method of detecting multi-height gestures by millimeter-wave radar system 400, according to an embodiment of the present invention. As shown in Figures 4M-4O, gesture 422 is a gesture of an object that has a trajectory with different zones (zone1 and zone2) inside the same field of view (e.g., two-dimensional trajectory in the vertical direction). Gesture 422 may be tracked by detecting transitions between zones (zonei and zone2). Some embodiments may track gesture 422 by tracking the trajectory within the zones (zone1 and/or zone2).

Gesture 424 is a gesture of an object that travels between different fields of views and different ranges in a three-dimensional motion. As shown, the presence of an object in a particular range may be associated with a corresponding range zone pixel.

Gesture signatures may be mapped with specific detections of millimeter-wave radars 102 in specific range zones. For example, processor 404 may map (associate) gestures 422 and 424 with gesture signatures 442 and 444, respectively, as shown by Figures 4M-4O. For example, gesture signature 422 is mapped to gesture 442, which is associated with a transition from zone2 of field of view 1142, to zone1 of field of view 1142, to zone2 of field of view 1142, to zone1 of field of view 1142. Gesture signature 424 is mapped to gesture 444, which is associated with a transition from zone1 of field of view 1142, to zone2 of field of view 1141, to zone2 of field of view 1142.

In some embodiments, signals S1021H and S1022H may have more than 1 bit, (e.g., 8 bits, 10 bits, 12 bits, 14 bits, 16 bits, 32 bits, etc.) where the digital value represents the height of the object detection. In such embodiments, processor 404 may determine the gesture signature based on the trajectory of the object as well as on the range zone in which the gesture was detected. For example, Figures 4P-4R illustrate another method of detecting multi-height gestures by millimeter-wave radar system 400, according to an embodiment of the present invention.

As shown in Figure 4P, gesture 426 is the gesture of an object (e.g., a finger) that has a trajectory from a lower range of zone1 of field of view 1141 to a higher range of zone1 of field of view 1141. As shown by timing diagram 436 of Figure 4R, processor 404 may detect the sweep in height in zone1 of field of view 1141 by an object and generate signal S1021H1 proportional to the range. As shown, gesture 426 may be associated with an analog or digital signal, such as shown by signal S1021H1 of timing diagram 436, and may be mapped to gesture signature 446, as shown by Figure 4R. Such gesture may be used, for example, to control (e.g., increase) the volume of the smartphone when music is playing. In some embodiments, such gesture over the smartphone may be used to adjust the volume of another device, such as a television or a sound system.

A similar gesture 428 occurring in zone2 of field of view 1141 may be detected by processor 404, which may generate a signal, such as shown S1021H2 of timing diagram 438, and may be mapped to gesture signature 448. Gesture signature 448 may be used, for example, to control (e.g., increase) the brightness of the display of touchscreen 108.

As shown, gesture signatures may be associated to different commands based on the range zone of detection (e.g., zone1 or zone2 in this example). In some embodiments, gestures 426 and 428 may be mapped to the same gesture signature (not shown) associated with zone3. In such embodiments, the same command may be executed for gesture 426 or 428.

In some embodiments, processor 404 may reconfigure how many zones and the zone limits based on user inputs or the state of smartphone 402. In some embodiments, a particular zone configuration may be associated with a subset of millimeter-wave radars 102 while a different zone configuration may be associated with another subset of millimeter-wave radars 102.

In some embodiments, millimeter-wave radar 1021 may stream to processor 404 digital values of signal S1021H when gesture signature 446 is detected. In other embodiments, only the starting and ending values of the sweep are transferred to processor 404. Other implementations are also possible.

In some embodiments, some of the range zones may overlap. For example, Figure 4S shows millimeter-wave radar system 400 with overlapping zones, according to an embodiment of the present invention. Having overlapping zones allow each zone to be larger, thereby increasing the tolerance for gesture recognition.

When detection occurs in an overlapping region, rules for resolving overlapping conflict may be used. In some embodiments, the rules may be dynamically changed such as based on the state of smartphone 402 or via user customization. In other embodiments, the rules are fixed.

In some embodiments, the zone thresholds, the amount of overlap, the zone-overlapping rules, and the number of zones may be dynamically changed by a human user and/or the state of smartphone 402. For example, in some embodiments, gestures detected in zoneo maybe ignored. When smartphone 402 is in sleep mode, presence has highest priority and the particular zone in which the object was detected (e.g., zone1 or zone2) is ignored. When smartphone 402 is not in sleep mode, gestures occurring in non-overlapping regions of zone1 and zone2 are associated with zone1 and zone2 detections, respectively. When no app is active in smartphone 402, gestures detected in the overlapping zone are associated with zone1. When an app is active, gestures detected in the overlapping zone are associated with zone2. Other rules may also be used.

In some embodiments, all of millimeter-wave radars 102 have the same zone configuration. In other embodiments, each millimeter-wave radar 102 has an independent zone configuration, which may be similar or different than zone configurations of other millimeter-wave radars 102.

Some embodiments may provide signals S102x and S102xH to processor 404 via dedicated traces in a PCB. Other embodiments may use communication protocols, such as SPI, I2C, or others, to provide the information to processor 404.

As shown by Figures 4A-4R, millimeter-wave radar system 400 includes two millimeter-wave radars 102 (1021 and 1022) disposed at the center right and at the bottom right portion of smartphone 402 and is capable of detecting various three-dimensional gestures. The arrangement illustrated in Figures 4A-4R has the advantage of detecting gesture signatures so as to provide half-screen (or quarter screen, depending on the height) control. Gestures that may be detected including vertical movements (swipe up or down) as well as height swipes (in a single millimeter-wave radar or between millimeter-wave radars). Such gestures may advantageously be used for functions such as scrolling, app initiation, volume control, speed dials, user authentication, superficial app control, among others. In some embodiments, such functions maybe dynamically changed based on the state of smartphone 402 (e.g., in a context-based manner) and may be customized by a user and/or a device manufacturer.

Millimeter-wave radar systems that include two millimeter-wave radars may be arrange in a manner different than shown in Figures 4A-4R. Different arrangements may allow for different gestures recognition in different areas of the smartphone. For example, Figure 5 shows a top view of millimeter-wave radar system 500 having two millimeter-wave radars 102, according to an embodiment of the present invention. Some embodiments may be implemented with monostatic millimeter-wave radars. Other embodiments may be implemented with millimeter-wave radars in other configurations, such as bistatic millimeter-wave radars. As shown by Figure 5, processor 504 may detect horizontal gestures, such as gesture 506. Millimeter-wave radar system 500 may also detect gestures based on height and/or multiple detections.

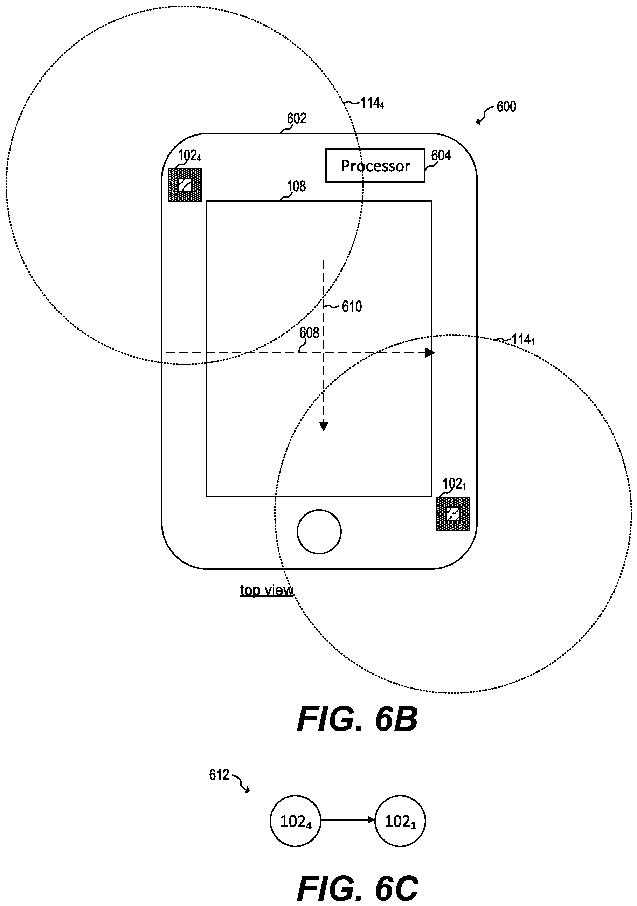

Figures 6A and 6B show a top view of millimeter-wave radar system 600 having two millimeter-wave radars 102, according to an embodiment of the present invention. Some embodiments may be implemented with millimeter-wave radars in monostatic configuration. Other embodiments may be implemented with millimeter-wave radars in other configurations, such as in bistatic configuration. As shown by Figure 6A, processor 604 may detect diagonal gestures, such as gesture 606. As shown by Figure 6B, depending on the height and size of smartphone 602, processor 606 may also detect horizontal gestures, such as 608 and 610. Gestures 606, 608 and 610 may be mapped to the same gesture signature 612, as shown in Figure 6C. Millimeter-wave radar system 600 may also detect gestures based on height and/or multiple detections.

Some embodiments may dispose the millimeter-wave radars 102 in other locations within the embodiment device. For example, Figure 7 shows a top view of millimeter-wave radar system 700 having two millimeter-wave radars 102, according to an embodiment of the present invention. Some embodiments may be implemented with millimeter-wave radars in monostatic, bistatic, or other configurations.. As shown by Figure 7, processor 704 may detect diagonal gestures, such as gesture 706, as well as horizontal gestures, such as gesture 708. Millimeter-wave radar system 700 may also detect gestures based on height and/or multiple detections.

As shown by Figures 4A-4R, 5, 6A-6C, and 7, a millimeter-wave radar system having two (e.g., monostatic) millimeter-wave radars may be used for two-point pixel gesture recognition. In other words, each of the millimeter-wave radars may be associated with a point that is either on (object detected) or off (object not detected), and patterns (gesture signatures), such as shown by Figures 4F, 4I, 4O, and 6C may be associated with each pixel (radar). Two-pixel patterns where the pixels include range information, such as shown by the patterns of Figures 4L and 4R, are also possible.

Millimeter-wave radar systems having more than two millimeter-wave radars are also possible. Advantages of some embodiments that include more than two millimeter-wave radars include the capability of additional gesture recognition and multi-pixel (e.g., three, four, five, six or more pixels) pattern recognition (where each monostatic millimeter-wave radar represents a pixel). For example, Figures 8A and 8B show possible gestures 806, 808 and 810, and their respective gesture signatures 816, 818 and 820, of millimeter-wave radar system 800 having three millimeter-wave radars 102, according to an embodiment of the present invention. Some embodiments may be implemented with millimeter-wave radars in monostatic, bistatic, or other configurations.

Gesture 806 correspond to an object having a trajectory from field of view 1145 to field of view 1142 passing through field of view 1141 of millimeter-wave radar 1021, as shown by gesture signature 816 of Figure 8B.Gesture 808 correspond to an object having a trajectory from field of view 1141 to field of view 1145, as shown by gesture signature 818 of Figure 8B. Gesture 810 correspond to an object having a trajectory from field of view 1145 to field of view 1142 without passing through field of view 1141 of millimeter-wave radar 1021, as shown by gesture signature 820 of Figure 8B.

As also shown by Figures 8A and 8B, the absence of detection of an object in a field of view may also determine which gesture is performed. For example, the difference between gestures 806 and 810 is the absence of detection of the object by millimeter-wave radar 1021, as shown by gesture signatures 816 and 820.

As shown, millimeter-wave radar system 800 may provide half-screen, quarter screen, or full screen control. Millimeter-wave radar system 800 may also detect gestures based on height and/or multiple detections.

Figures 9A and 9B show possible gestures 906, 908 and 910, and their respective gesture signatures 916, 918 and 920, of millimeter-wave radar system 900 having three millimeter-wave radars 102, according to an embodiment of the present invention. Some embodiments may be implemented with millimeter-wave radars in monostatic, bistatic, or other configurations.

Gesture 906 correspond to an object having a trajectory from field of view 1144 to field of view 1146 passing through field of view 1141, as shown by gesture signature 916 of Figure 9B. Gesture 908 correspond to an object having a trajectory from field of view 1146 to field of view 1144 passing through field of view 1141, as shown by gesture signature 918of Figure 9B. Gesture 906 correspond to an object having a trajectory from field of view 1146 to field of view 1144 without passing through field of view 1141, as shown by gesture signature 920 of Figure 9B.

As shown, clockwise and counter-clockwise gestures may be detected by processor 904 and millimeter-wave radars 1021, 1024 and 1026. Millimeter-wave radar system 900 may also detect gestures based on height and/or multiple detections.

Other configurations are also capable of detecting clockwise or counter-clockwise gestures. For example, Figures 10 and 11 show respective top views of millimeter-wave radar systems 1000 and 1100 having three millimeter-wave radars 102, according to an embodiment of the present invention. Some embodiments may be implemented with millimeter-wave radars in monostatic, bistatic, or other configurations.

As shown, millimeter-wave radar systems 1000 and 1100 are capable of detecting clockwise and counter-clockwise gestures. Millimeter-wave radar systems 1000 and 1100 may also detect gestures based on height and/or multiple detections.

Figures 12 and 13 show respective top views of millimeter-wave radar systems 1200 and 1300 having four millimeter-wave radars 102, according to an embodiment of the present invention. Some embodiments may be implemented with millimeter-wave radars in monostatic, bistatic, or other configurations.

Figure 14 shows a top view of millimeter-wave radar system 1400 having six millimeter-wave radars 102 according to an embodiment of the present invention. Some embodiments may be implemented with millimeter-wave radars in monostatic, bistatic, or other configurations.

Millimeter-wave radar systems 1200, 1300 and 1400 may detect horizontal, vertical, clockwise, counter-clockwise and other gestures, as well as gestures based on height and/or multiple detections, in a similar manner as described with respect to millimeter-wave radar systems 400, 500, 600, 700, 800, 900, 1000, 1100.

Millimeter-wave radar systems may be used for various types of use cases. Figures 15-17 show non-limiting examples of use cases of millimeter-wave radar system 1400, according to embodiments of the present invention. It is understood that some of the use cases described may be performed with millimeter-wave radar systems with other arrangements and having less millimeter-wave radars 102, such as millimeter-wave radar systems 400, 500, 600, 700, 800, 900, 1000, 1100, 1200 and 1300, or more millimeter-wave radar systems, such as having seven, eight, ten, or more millimeter-wave radars 102.

It is also understood that particular millimeter-wave radars 102, such as particular monostatic millimeter-wave radars, of millimeter-wave radar system 1400 (as shown in Figure 15), may be associated to one or more millimeter-wave radar sets. A particular millimeter-wave radar set may behave as a virtual millimeter-wave radar system, such as described previously. For example, millimeter-wave radar system 1400 may include a millimeter-wave radar set that includes millimeter-wave radars 1022, 1026, 1024, and 1025 and does not include millimeter-wave radars 1023, and 1021. Such set may operate in a similar manner than millimeter-wave radar system 1200. As another example, a set may include millimeter-wave radars 1021, and 1022 without including millimeter-wave radars 1023, 1026, 1024, and 1025. Such set may operate in a similar manner than millimeter-wave radar system 400. In some embodiments, the set associations and the number of sets may be changed dynamically by adding or removing millimeter-wave radars from the set. For example, the dynamical changes may be based on user input or the state of the smartphone. In some embodiments, a single set is used at a given time in the millimeter-wave radar system. In other embodiments, more than one set is used at a given time. In some embodiments, the number of sets may also change dynamically.

Adding or removing millimeter-wave radars from a millimeter-wave radar set may be achieved in different ways. For example, in some embodiments, adding or removing millimeter-wave radars from a millimeter-wave radar set is achieved by enabling (e.g., active mode) or disabling (e.g., sleep mode or other low power mode) millimeter-wave radars 102. In other embodiments, a millimeter-wave radar may be removed from a millimeter-wave radar set by processor 1404 ignoring its output.

As another example, millimeter-wave radar system 1400 may associate millimeter-wave radars 1021, 1022, and 1025 to group (set) 1502 of millimeter-wave radars, and millimeter-wave radars 1023, 1024, and 1026 to group (set) 1504 of millimeter-wave radars. Each of groups 1502 and 1504 may detect gestures independently. In other words, detections of objects by millimeter-wave radars 102 of group 1504 are not included in the gesture signatures of group 1502 and vice-versa. In some embodiments, the commands executed depend on how the millimeter-wave radars 102 are grouped. In some embodiments, the default grouping is having a single group that includes all millimeter-wave radars 102 in millimeter-wave radar system 1400.

By operating each group of millimeter-wave radars independently, it is possible to allow simultaneous multi-finger or multi-hand control. For example, a game may be controlled by a human user by simultaneously using a left hand to perform gestures in front of group 1504 and using a right hand to perform gestures in front of group 1502. Other groupings are also possible. In other embodiments, gestures signatures detected by each set trigger independent commands irrespective of whether the detected gesture signatures occurred simultaneously or not. In an embodiment, a single gesture is used to trigger a plurality of actions, where each triggered action associated to one of the sets of millimeter-wave radars. In other words, a same gesture is detected by a plurality (e.g., all) of the sets of millimeter-wave radars, each set giving rise to a command being executed via detection of this gesture.

Simultaneous object detection may also be used to detect complex gestures. For example, as shown by Figure 16, by simultaneously performing gestures 1602 and 1604, with, for example, two fingers of the same hand, it is possible to cause the rotation of a map displayed by a map app in touchscreen 108. Other complex gestures may be detected and associated with respective gesture signatures that are associated with respective commands. Functions such as front camera focusing and ranging, three-dimensional object tracking, application switching, scrolling up, down, left-to-right, right-to-left, diagonally, gaming control, user authentication by gesture patterns, tracking motion on top of touchscreen 108 using triangulation, volume dial control, app initiation and termination, switching between apps, as well as customizing each (e.g., monostatic) millimeter-wave radar 102 for different application are also possible.

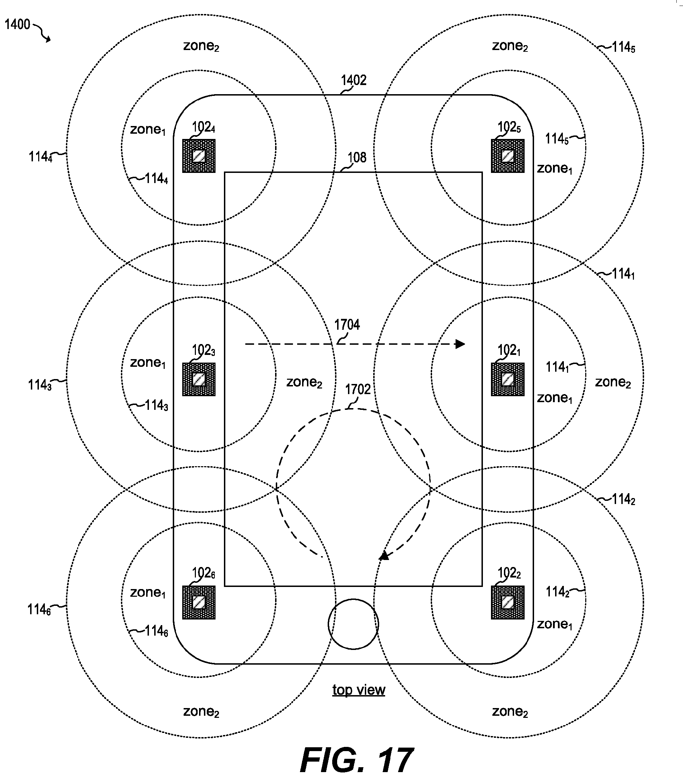

In some embodiments, gesture detections at different zones (ranges) are associated with different commands. For example, processor 1404 may detect a presence of an object in a first range zone (e.g., zone1) of a plurality of range zones (e.g., four or more range zones) of field of view 114, where each range zone is associated with a respective command database. After determining a gesture signature based the detected presence of the object, processor 1404 may select a command from the command database of the range zone in which the object presence was detected based on the gesture signature, and cause execution of the selected command associated with the detected gesture signature. For example, Figure 17 illustrates respective fields of view 114 of millimeter-wave radars 102 at heights hi and h2. As shown in Figure 17, in a video app, for example, gestures at zone2 may be associated with fast-forward or backward. For example, gesture 1702 is a gesture of an object that has a trajectory that is sequentially detected by millimeter-wave radars 1026, 1023, 1021, and 1022 at height h2, and may be associated with the function of fast-forwarding a video. The same sequence of detection at a different height (e.g., height hi - zone1) may have a different function associated with it. As another example, an object gesture associated with a sweep in height (not shown) in zone2 maybe associated with volume commands (e.g., increase or decrease volume).

Gestures in zone1 may be associated with starting/stopping playback. For example, gesture 1704 is a gesture of an object that has a trajectory that is sequentially detected by millimeter-wave radars 1023, and 1021 at height h1, and may be associated with stopping the video.

Figures 18A and 18B illustrate a flow chart of embodiment method 1800 of gesture detection and associated command execution, according to an embodiment of the present invention. Method 1800 may be implemented in millimeter-wave radar systems such as millimeter-wave radar systems 400, 500, 600, 700, 800, 900, 1000, 1100, 1200, 1300, and 1400, for example. Method 1800 may also be implemented by other radar system implementations and in other ways known in the art.

During step 1802, presence of an object, such as a human finger, is detected in one or more of the fields of view (e.g., 114) of the millimeter-wave radars (e.g., 102) of the millimeter-wave radar system. After presence of the object is detected in one or more of the fields of views, the pattern recognition engine is enabled during step 1804. The pattern recognition engine may be, for example, a hardware, software, or a hardware/software combination configured to associate detected gesture signatures with gesture signatures in a database, as described in steps 1808 and 1812. In some embodiments, the pattern recognition engine is always enabled for real-time continuous monitoring.

During step 1806, each of the millimeter-wave radars (which may be referred to as a pixel) detects and captures the objects presence and associated range and time of detection as the object's moves within its respective field of view. In some embodiments, the range information refers to whether the object was detected in a valid field of view or in a field of view that is configured to be ignored (e.g., very close to the touchscreen). In other embodiments, the range information includes information of the zone of detection. In yet other embodiments, the range information includes multiple bits based on the distance from the respective (e.g., monostatic) millimeter-wave radar.

In some embodiments, the time information is obtained with reference to a common clock. In other embodiments, time information is obtained with respect to time stamps or other synchronization mechanism. Additional details of step 1806 are provided in Figure 18B and associated description.

During step 1810, the database of gesture signatures is selected based on, for example, range of detection of particular pixels. It may also be selected based on the state of the device as well (e.g., device is in sleep mode, or running a particular app). The particular sequence of pixel detections and associated range and times are compared with the gesture signatures in the selected database for a match during steps 1808 and 1812. Algorithm such as the Knuth-Morris-Pratt algorithm may be used for pattern recognition.

If a match is not detected and a timer has not expired, the millimeter-wave radars continue capturing detection information during step 1806. If a match is not detected and the timer has expired, the pattern recognition engine is disabled during step 1818 and waits to detect a presence of an object during step 1802. In some embodiments, the expiration timer is not implemented and the millimeter-wave radars continuously capture detection information. In some embodiments, a mechanism to reset the current sequence is implemented, such as a moving window or based on a second timer, for example.

If a match is detected during step 1812, the command associated with the gesture signature detected is executed during step 1820. In some embodiments, the particular command associated with the particular gesture signature is selected from a command database. The command data based maybe fixed in some embodiments. In other embodiments, the command database changes based on the device state (e.g., a particular app running in a smartphone), or based on the range zone in which the detected gesture occurred, for example. The command database is selected during step 1822.

Figure 18B shows a possible implementation of step 1806 for capturing detection information on the millimeter-wave radars, according to an embodiment of the present invention. In step 1824, live radar data is collected from one or more (e.g., monostatic) millimeter-wave radars. In step 1826, signal conditioning, low pass filtering and background removal is performed. During step 1826, radar data received during step 402 is filtered, DC components are removed, and IF data is filtered to, e.g., remove the Tx-Rx self-interference and optionally pre-filtering the interference colored noise. In some embodiments, filtering includes removing data outliers that have significantly different values from other neighboring range-gate measurements. Thus, this filtering also serves to remove background noise from the radar data. In a specific example, a Hampel filter is applied with a sliding window at each range-gate to remove such outliers. Alternatively, other filtering for range preprocessing known in the art may be used.

In step 1830, a series of FFTs are performed on conditioned radar data produced during step 1826. In some embodiments, a windowed FFT having a length of the chirp (e.g., 256 samples) is calculated along each waveform for each of a predetermined number of chirps in a frame of data. Alternatively, other frame lengths may be used. The FFTs of each waveform or chirp may be referred to as a "range FFT." In alternative embodiments, other transform types could be used besides an FFT, such as a Discrete Fourier Transform (DFT) or a z-transform.

During step 1832, the object or objects (e.g., fingers) are detected by one or more of the millimeter-wave radars. In some embodiments, the object closest to the millimeter-wave radar is associated with the detection (detections of objects farther than the nearest detection are ignored).

During step 1834, repeated detections are collapsed into a single detection and the sequence of detections is sent for further processing by, for example, the pattern recognition engine. For example, a finger holding steady for a period of time (e.g., 100 ms) inside the detectable field of view may generate multiple counts of detection. Instead of reporting a string of repeated equal counts, some embodiments report a single count for purposes of pattern recognition.

Figure 19 shows a schematic diagram of millimeter-wave radar system 1400, according to an embodiment of the present invention. Some embodiments may be implemented with millimeter-wave radars in monostatic, bistatic, or other configurations.

As shown by Figure 19, processor 1404 communicates with each of millimeter-wave radars 102 by using an SPI bus. Millimeter-wave radars 102 also receive a common clock CLK, which is used as a reference for the timing of object detection.

In some embodiments, other wired or wireless communication protocols may be used. In some embodiments, other synchronization methods, such as using time stamps, may be used instead of or in addition to having a common clock.

Some millimeter-wave radar systems have one or more (e.g., monostatic) millimeter-wave radars point in a direction different from the front of the device pointing outwards. For example, Figure 20 shows a side view of millimeter-wave radar system 2000 having six millimeter-wave radars 102 pointing outwards from the front of smartphone 2002 and one millimeter-wave radar 102 pointing outwards from the back of smartphone 2002, according to an embodiment of the present invention. Some embodiments may be implemented with millimeter-wave radars in monostatic, bistatic, or other configurations.

A millimeter-wave radar point towards the back of smartphone 2002 may be used, for example, to control apps without obstructing the user's view of the display. Gestures such as gesture 2006 involving millimeter-wave radars pointing towards different directions are also possible. Other configurations, such as having millimeter-wave radars pointing towards a side (e.g., left or right), top, or bottom of smartphone 2002, or a combination thereof, are also possible.

Some embodiments may combine one or more of the features described in millimeter-wave radar systems 100, 200, 400, 500, 600, 700, 800, 900, 1000, 1100, 1200, 1300, 1400, and 2000. For example, with respect to Figure 20, in some embodiments, gesture 2006 may be mapped to a gesture signature (not shown) that is associated with object detection in respective fields of view 114 while ignoring range information. Other embodiments may consider the range zone of one or more fields of view 114 in which the object was detected. In yet other embodiments, the range trajectory in one or more fields of view 114 may also be considered. Other combinations are also possible.

Some embodiments may combine gesture detection systems and methods described herein with other gesture detection systems and methods. For example, in some embodiments, a processor may extract from one or more of the millimeter-wave radars 102 micro-Doppler signatures from an inverse synthetic-aperture radar (ISAR) image to determine a gesture, such as described in U.S. Patent Application No. 15/937,283, filed on March 27, 2018.

## Claims

1. A controller (318) configured to be coupled to a plurality of millimeter-wave radars (102) mounted on a device (116) having a screen, the controller (318) configured to:
at a first time, detect a first presence of an object in a field of view of a first millimeter-wave radar of the plurality of millimeter-wave radars (102);
at a second time, detect a second presence of the object in a field of view of a second millimeter-wave radar of the plurality of millimeter-wave radars (102), the second time occurring after the first time;
determine a gesture signature (408, 414 420, 422, 424, 446, 448, 612, 16, 818, 820, 916, 918, 920) based on detecting the first presence of the object in the field of view of the first millimeter-wave radar at the first time and detecting the second presence of the object in the field of view of the second millimeter-wave radar at the second time; and
execute a command based on the determined gesture signature (408, 414 420, 422, 424, 446, 448, 612, 16, 818, 820, 916, 918, 920),
select a first set of millimeter-wave radars from the plurality of millimeter-wave radars (102), wherein the first set comprises the first and second millimeter-wave radars, wherein each millimeter-wave radar (102) of the plurality of millimeter-wave radars (102) is configured to generate a signal associated with a presence of an object in respective fields of view at respective outputs, and wherein determining the gesture signature (408, 414 420, 422, 424, 446, 448, 612, 16, 818, 820, 916, 918, 920) is further based on outputs of each millimeter-wave radar of the first set, wherein the first set is a subset of millimeter-wave radars from the plurality of millimeter-wave radars (102).

2. The controller (318) of claim 1, wherein the controller (318) is configured to determine the gesture signature (408, 414 420, 422, 424, 446, 448, 612, 16, 818, 820, 916, 918, 920) further based on an absence or a presence of the object in a field of view of a third millimeter-wave radar of the plurality of millimeter-wave radars (102) at a third time, wherein the third time is between the first time and the second time.

3. The controller of claim 1 or 2, wherein the controller is further configured to dynamically modify the first set by adding or removing one or more millimeter-wave radars from the first set.

4. The controller (318) of claim 3, further configured to execute a first command based on the determined gesture signature (408, 414 420, 422, 424, 446, 448, 612, 16, 818, 820, 916, 918, 920) when the first set is selected, and a second command different from the first command based on the determined gesture signature (408, 414 420, 422, 424, 446, 448, 612, 16, 818, 820, 916, 918, 920) when the modified first set is selected.

5. The controller (318) of any of claims 1, to 4, further configured to:
select a second set of millimeter-wave radars from the plurality of millimeter-wave radars (102), the second set comprising a plurality of millimeter-wave radars (102);
determine a second gesture signature based on outputs of the millimeter-wave radars of the second set; and
execute a second command based on the determined second gesture signature.

6. The controller (318) of claim 5, wherein each millimeter-wave radar (102) of the plurality of millimeter-wave radars (102) belongs, at most, to one set of the first and second sets at a given time.

7. The controller (318) of any of the preceding claims, further configured to determine the command from a plurality of commands based on a state of the device (116).

8. The controller (318) of claim 7, wherein the state of the device (116) comprises a sleep state, an active state, and a first app running state.

9. The controller (318) of any of the preceding claims, wherein the object comprises a human finger.

10. The controller (318) of any of the preceding claims, wherein the controller (318) is configured to ignore a presence of the object in the field of view of the first millimeter-wave radar or the second millimeter-wave radar when the object is at first distance from the screen or closer.

11. The controller (318) of claim 10, wherein the first distance is between 2 cm and 5 cm.

12. The controller (318) of any of the preceding claims, wherein the gesture signature (408, 414 420, 422, 424, 446, 448, 612, 16, 818, 820, 916, 918, 920) corresponds to a clockwise or counter-clockwise gesture of the object.

13. A device (116) comprising:
a screen;
a plurality of millimeter-wave radars (102) mounted on the device (116); and
a controller (318) according to one of the preceding claims.

14. A method comprising:
detecting, at a first time, a first presence of a first object in a field of view of a first millimeter-wave radar of a plurality of millimeter-wave radars mounted on a device having a screen;
detecting, at a second time, a second presence of a second object in a field of view of a second millimeter-wave radar of the plurality of millimeter-wave radars;
determining a gesture signature based on outputs of the first and second millimeter-wave radars; and
executing a command on the device based on the determined gesture signature,
selecting a first set of millimeter-wave radars from the plurality of millimeter-wave radars (102), wherein the first set comprises the first and second millimeter-wave radars, wherein each millimeter-wave radar (102) of the plurality of millimeter-wave radars (102) is configured to generate a signal associated with a presence of an object in respective fields of view at respective outputs, and wherein determining the gesture signature (408, 414 420, 422, 424, 446, 448, 612, 16, 818, 820, 916, 918, 920) is further based on outputs of each millimeter-wave radar of the first set, wherein the first set is a subset of millimeter-wave radars from the plurality of millimeter-wave radars.

## Patentansprüche

1. Eine Steuerung (318), die ausgebildet ist, mit einer Mehrzahl von Millimeterwellenradaren (102) gekoppelt zu werden, die auf einer Vorrichtung (116) befestigt sind, die einen Bildschirm aufweist, wobei die Steuerung (318) ausgebildet ist:
zu einem ersten Zeitpunkt ein erstes Vorhandensein eines Objekts in einem Sichtfeld eines ersten Millimeterwellenradars der Mehrzahl von Millimeterwellenradaren (102) zu detektieren;
zu einem zweiten Zeitpunkt ein zweites Vorhandensein des Objekts in einem Sichtfeld eines zweiten Millimeterwellenradars der Mehrzahl von Millimeterwellenradaren (102) zu detektieren, wobei der zweite Zeitpunkt nach dem ersten Zeitpunkt auftritt;
eine Gestensignatur (408, 414 420, 422, 424, 446, 448, 612, 16, 818, 820, 916, 918, 920) basierend auf dem Detektieren des ersten Vorhandenseins des Objekts in dem Sichtfeld des ersten Millimeterwellenradars zu dem ersten Zeitpunkt und dem Detektieren des zweiten Vorhandenseins des Objekts in dem Sichtfeld des zweiten Millimeterwellenradars zu dem zweiten Zeitpunkt zu bestimmen; und
einen Befehl basierend auf der bestimmten Gestensignatur (408, 414 420, 422, 424, 446, 448, 612, 16, 818, 820, 916, 918, 920) auszuführen,
einen ersten Satz von Millimeterwellenradaren aus der Mehrzahl von Millimeterwellenradaren (102) auszuwählen, wobei der erste Satz das erste und zweite Millimeterwellenradar umfasst, wobei jedes Millimeterwellenradar (102) der Mehrzahl von Millimeterwellenradaren (102) ausgebildet ist, ein Signal zu erzeugen, das einem Vorhandensein eines Objekts in jeweiligen Sichtfeldern an jeweiligen Ausgängen zugeordnet ist, und wobei das Bestimmen der Gestensignatur (408, 414 420, 422, 424, 446, 448, 612, 16, 818, 820, 916, 918, 920) ferner auf Ausgängen jedes Millimeterwellenradars des ersten Satzes basiert, wobei der erste Satz eine Teilmenge von Millimeterwellenradaren aus der Mehrzahl von Millimeterwellenradaren (102) ist.

2. Die Steuerung (318) gemäß Anspruch 1, wobei die Steuerung (318) ausgebildet ist, die Gestensignatur (408, 414 420, 422, 424, 446, 448, 612, 16, 818, 820, 916, 918, 920) ferner basierend auf einem Nichtvorhandensein oder einem Vorhandensein des Objekts in einem Sichtfeld eines dritten Millimeterwellenradars der Mehrzahl von Millimeterwellenradaren (102) zu einem dritten Zeitpunkt zu bestimmen, wobei der dritte Zeitpunkt zwischen dem ersten Zeitpunkt und dem zweiten Zeitpunkt liegt.

3. Die Steuerung gemäß Anspruch 1 oder 2, wobei die Steuerung ferner ausgebildet ist, den ersten Satz durch Hinzufügen oder Entfernen eines oder mehrerer Millimeterwellenradare aus dem ersten Satz dynamisch zu modifizieren.

4. Die Steuerung (318) gemäß Anspruch 3, die ferner ausgebildet ist zum Ausführen eines ersten Befehls basierend auf der bestimmten Gestensignatur (408, 414 420, 422, 424, 446, 448, 612, 16, 818, 820, 916, 918, 920), wenn der erste Satz ausgewählt wird, und eines zweiten, von dem ersten Befehl verschiedenen, Befehls basierend auf der bestimmten Gestensignatur (408, 414 420, 422, 424, 446, 448, 612, 16, 818, 820, 916, 918, 920), wenn der modifizierte erste Satz ausgewählt wird.

5. Die Steuerung (318) gemäß einem der Ansprüche 1 bis 4, die ferner ausgebildet ist zum:
Auswählen eines zweiten Satzes von Millimeterwellenradaren aus der Mehrzahl von Millimeterwellenradaren (102), wobei der zweite Satz eine Mehrzahl von Millimeterwellenradaren (102) umfasst;
Bestimmen einer zweiten Gestensignatur basierend auf Ausgängen der Millimeterwellenradare des zweiten Satzes; und
Ausführen eines zweiten Befehls basierend auf der bestimmten zweiten Gestensignatur.

6. Die Steuerung (318) gemäß Anspruch 5, wobei jedes Millimeterwellenradar (102) der Mehrzahl von Millimeterwellenradaren (102) zu einem gegebenen Zeitpunkt höchstens zu einem Satz des ersten und zweiten Satzes gehört.

7. Die Steuerung (318) gemäß einem der vorangehenden Ansprüche, die ferner ausgebildet ist zum Bestimmen des Befehls aus einer Mehrzahl von Befehlen basierend auf einem Zustand der Vorrichtung (116).

8. Die Steuerung (318) gemäß Anspruch 7, wobei der Zustand der Vorrichtung (116) einen Ruhezustand, einen aktiven Zustand und einen ersten App-Betriebszustand umfasst.

9. Die Steuerung (318) gemäß einem der vorangehenden Ansprüche, wobei das Objekt einen menschlichen Finger umfasst.

10. Die Steuerung (318) gemäß einem der vorangehenden Ansprüche, wobei die Steuerung (318) ausgebildet ist, ein Vorhandensein des Objekts in dem Sichtfeld des ersten Millimeterwellenradars oder des zweiten Millimeterwellenradars zu ignorieren, wenn sich das Objekt in einer ersten Distanz zu dem Bildschirm oder näher befindet.

11. Die Steuerung (318) gemäß Anspruch 10, wobei die erste Distanz zwischen 2 cm und 5 cm beträgt.

12. Die Steuerung (318) gemäß einem der vorangehenden Ansprüche, wobei die Gestensignatur (408, 414 420, 422, 424, 446, 448, 612, 16, 818, 820, 916, 918, 920) einer Geste des Objekts im Uhrzeigersinn oder gegen den Uhrzeigersinn entspricht.

13. Eine Vorrichtung (116), umfassend:
einen Bildschirm;
eine Mehrzahl von Millimeterwellenradaren (102), die auf der Vorrichtung (116) befestigt sind; und
eine Steuerung (318) gemäß einem der vorangehenden Ansprüche.

14. Ein Verfahren, umfassend:
Detektieren, zu einem ersten Zeitpunkt, eines ersten Vorhandenseins eines ersten Objekts in einem Sichtfeld eines ersten Millimeterwellenradars einer Mehrzahl von Millimeterwellenradaren, die auf einer Vorrichtung befestigt sind, die einen Bildschirm aufweist;
Detektieren, zu einem zweiten Zeitpunkt, eines zweiten Vorhandenseins eines zweiten Objekts in einem Sichtfeld eines zweiten Millimeterwellenradars der Mehrzahl von Millimeterwellenradaren;
Bestimmen einer Gestensignatur basierend auf Ausgängen des ersten und zweiten Millimeterwellenradars; und
Ausführen eines Befehls auf der Vorrichtung basierend auf der bestimmten Gestensignatur,
Auswählen eines ersten Satzes von Millimeterwellenradaren aus der Mehrzahl von Millimeterwellenradaren (102), wobei der erste Satz das erste und zweite Millimeterwellenradar umfasst, wobei jedes Millimeterwellenradar (102) der Mehrzahl von Millimeterwellenradaren (102) ausgebildet ist, ein Signal zu erzeugen, das einem Vorhandensein eines Objekts in jeweiligen Sichtfeldern an jeweiligen Ausgängen zugeordnet ist, und wobei das Bestimmen der Gestensignatur (408, 414 420, 422, 424, 446, 448, 612, 16, 818, 820, 916, 918, 920) ferner auf Ausgängen jedes Millimeterwellenradars des ersten Satzes basiert, wobei der erste Satz eine Teilmenge von Millimeterwellenradaren aus der Mehrzahl von Millimeterwellenradaren ist.

## Revendications

1. Contrôleur (318) configuré pour être couplé à une pluralité de radars à ondes millimétriques (102) montés sur un dispositif (116) ayant un écran, le contrôleur (318) étant configuré pour :
à un premier moment, détecter une première présence d'un objet dans un champ de vision d'un premier radar à ondes millimétriques de la pluralité de radars à ondes millimétriques (102) ;
à un deuxième moment, détecter une deuxième présence de l'objet dans un champ de vision d'un deuxième radar à ondes millimétriques de la pluralité de radars à ondes millimétriques (102), le deuxième moment se produisant après le premier moment ;
déterminer une signature gestuelle (408, 414 420, 422, 424, 446, 448, 612, 16, 818, 820, 916, 918, 920) sur la base de la détection de la première présence de l'objet dans le champ de vision du premier radar à ondes millimétriques au premier moment et de la détection de la deuxième présence de l'objet dans le champ de vision du deuxième radar à ondes millimétriques au deuxième moment ; et
exécuter une commande sur la base de la signature gestuelle déterminée (408, 414 420, 422, 424, 446, 448, 612, 16, 818, 820, 916, 918, 920),
sélectionner un premier ensemble de radars à ondes millimétriques parmi la pluralité de radars à ondes millimétriques (102), le premier ensemble comprenant les premier et deuxième radars à ondes millimétriques, chaque radar à ondes millimétriques (102) de la pluralité de radars à ondes millimétriques (102) étant configuré pour générer un signal associé à une présence d'un objet dans des champs de vision respectifs à des sorties respectives, et la détermination de la signature gestuelle (408, 414 420, 422, 424, 446, 448, 612, 16, 818, 820, 916, 918, 920) étant en outre basée sur des sorties de chaque radar à ondes millimétriques du premier ensemble, le premier ensemble étant un sous-ensemble de radars à ondes millimétriques de la pluralité de radars à ondes millimétriques (102).

2. Contrôleur (318) selon la revendication 1, le contrôleur (318) étant configuré pour déterminer la signature gestuelle (408, 414 420, 422, 424, 446, 448, 612, 16, 818, 820, 916, 918, 920) sur la base en outre d'une absence ou d'une présence de l'objet dans un champ de vision d'un troisième radar à ondes millimétriques de la pluralité de radars à ondes millimétriques (102) à un troisième moment, le troisième moment étant compris entre le premier moment et le deuxième moment.

3. Contrôleur selon la revendication 1 ou 2, le contrôleur étant en outre configuré pour modifier dynamiquement le premier ensemble en ajoutant ou en enlevant un ou plusieurs radars à ondes millimétriques du premier ensemble.

4. Contrôleur (318) selon la revendication 3, configuré en outre pour exécuter une première commande sur la base de la signature gestuelle déterminée (408, 414 420, 422, 424, 446, 448, 612, 16, 818, 820, 916, 918, 920) lorsque le premier ensemble est sélectionné, et une deuxième commande différente de la première commande sur la base de la signature gestuelle déterminée (408, 414 420, 422, 424, 446, 448, 612, 16, 818, 820, 916, 918, 920) lorsque le premier ensemble modifié est sélectionné.

5. Contrôleur (318) selon l'une des revendications 1 à 4, configuré en outre pour :
sélectionner un deuxième ensemble de radars à ondes millimétriques parmi la pluralité de radars à ondes millimétriques (102), le deuxième ensemble comprenant une pluralité de radars à ondes millimétriques (102) ;
déterminer une deuxième signature gestuelle sur la base de sorties des radars à ondes millimétriques du deuxième ensemble ; et
exécuter une deuxième commande sur la base de la deuxième signature gestuelle déterminée.

6. Contrôleur (318) selon la revendication 5, chaque radar à ondes millimétriques (102) de la pluralité de radars à ondes millimétriques (102) appartenant, au plus, à un ensemble des premier et deuxième ensembles à un moment donné.

7. Contrôleur (318) selon l'une des revendications précédentes, configuré en outre pour déterminer la commande parmi une pluralité de commandes sur la base d'un état du dispositif (116).

8. Contrôleur (318) selon la revendication 7, l'état du dispositif (116) comprenant un état de veille, un état actif et un premier état d'exécution d'application.

9. Contrôleur (318) selon l'une des revendications précédentes, l'objet comprenant un doigt humain.

10. Contrôleur (318) selon l'une des revendications précédentes, le contrôleur (318) étant configuré pour ignorer une présence de l'objet dans le champ de vision du premier radar à ondes millimétriques ou du deuxième radar à ondes millimétriques lorsque l'objet se trouve à une première distance de l'écran ou plus proche.

11. Contrôleur (318) selon la revendication 10, la première distance étant comprise entre 2 cm et 5 cm.

12. Contrôleur (318) selon l'une des revendications précédentes, la signature gestuelle (408, 414 420, 422, 424, 446, 448, 612, 16, 818, 820, 916, 918, 920) correspondant à un geste de l'objet en sens horaire ou en sens antihoraire.

13. Dispositif (116) comprenant :
un écran ;
une pluralité de radars à ondes millimétriques (102) montés sur le dispositif (116) ; et
un contrôleur (318) selon l'une des revendications précédentes.

14. Procédé comprenant le fait de :
détecter, à un premier moment, une première présence d'un premier objet dans un champ de vision d'un premier radar à ondes millimétriques d'une pluralité de radars à ondes millimétriques montés sur un dispositif ayant un écran ;
détecter, à un deuxième moment, une deuxième présence d'un deuxième objet dans un champ de vision d'un deuxième radar à ondes millimétriques de la pluralité de radars à ondes millimétriques ;
déterminer une signature gestuelle sur la base de sorties des premier et deuxième radars à ondes millimétriques ; et
exécuter une commande sur le dispositif sur la base de la signature gestuelle déterminée,
sélectionner un premier ensemble de radars à ondes millimétriques parmi la pluralité de radars à ondes millimétriques (102), le premier ensemble comprenant les premier et deuxième radars à ondes millimétriques, chaque radar à ondes millimétriques (102) de la pluralité de radars à ondes millimétriques (102) étant configuré pour générer un signal associé à une présence d'un objet dans des champs de vision respectifs à des sorties respectives, et la détermination de la signature gestuelle (408, 414 420, 422, 424, 446, 448, 612, 16, 818, 820, 916, 918, 920) étant en outre basée sur des sorties de chaque radar à ondes millimétriques du premier ensemble, le premier ensemble étant un sous-ensemble de radars à ondes millimétriques de la pluralité de radars à ondes millimétriques.
